# EUROPEAN PATENT SPECIFICATION

(11) **EP 4 231 248 B1**
(45) Date of publication and mention of the grant of the patent: **18.03.2026**
(21) Application number: 23156958.3
(22) Date of filing: 16.02.2023
(51) Int. Cl.: G06T 19/20, A61C 13/00

(54) **METHOD FOR ESTIMATING AND RESTORING EDGE OF TOOTH CHANGED BY SCANNING**
VERFAHREN ZUR SCHÄTZUNG UND WIEDERHERSTELLUNG DER DURCH ABTASTUNG GEÄNDERTEN ZAHNKANTE
PROCÉDÉ D'ESTIMATION ET DE RESTAURATION DE BORD DE DENT MODIFIÉ PAR BALAYAGE

(30) Priority: 17.02.2022 JP 2022023010; 25.08.2022 JP 2022134415
(43) Date of publication of application: 23.08.2023
(73) Proprietor: Kabushiki Kaisha Shofu, Kyoto-shi Kyoto 605-0983 (JP)
(72) Inventor: YAMAMOTO, Makoto, Osaka, 540-0004 (JP); TAKADA, Hajime, Kyoto, 605-0983 (JP); INOUE, Tomoyuki, Kyoto, 605-0983 (JP)
(74) Representative: Eisenführ Speiser

(56) References cited:
- US-A1- 2019 125 490
- SABBAH KIFAYA ET AL: "Hole-Filling Techniques for 3D Objects: A Comparative Study", 2013, XP093052541, Retrieved from the Internet <URL:https://www.researchgate.net/profile/Kifaya-Sabbah/publication/259502921_Hole-Filling_Techniques_for_3D-Objects_A_Comparative_Study/links/5ff99e0a45851553a02efb57/Hole-Filling-Techniques-for-3D-Objects-A-Comparative-Study.pdf> [retrieved on 20230607]
- P�REZ EMILIANO ET AL: "A comparison of hole-filling methods in 3D", INTERNATIONAL JOURNAL OF APPLIED MATHEMATICS AND COMPUTER SCIENCE, vol. 26, no. 4, December 2016 (2016-12-01), pages 885 - 903, XP055910751, DOI: 10.1515/amcs-2016-0063

## Description

### Background of the Invention

### 1. Field of the Invention

The present invention relates to a method and apparatus for restoring an edge of a tooth, the edge being changed by scanning.

### 2. Description of the Related Art

JP 2019-080839 A discloses a method for estimating and restoring an abutment tooth form changed by scanning. The method disclosed in JP 2019-080839 A is configured to delete a temporary finish line of an edge of the abutment tooth, and extend a temporary finish line on a crown side and a temporary finish line on a tooth root side in the deleted part. The method disclosed in JP 2019-080839 A is also configured to estimate and restore a finish line of an edge to be formed outside the edge deleted in scan data based on the extended temporary finish line on the crown side and the extended temporary finish line on the tooth root side.

### Summary

However, the method of JP 2019-080839 A still has room for improvement in terms of improving quality of tooth scan data.

It is an object of the present invention to provide a method and an apparatus capable of improving quality of tooth scan data.

A method according to an aspect of the present invention is defined in claim 1.

An apparatus according to an aspect of the present invention is defined in claim 12.

The method and the apparatus according to the present invention enable improvement in quality of scan data on a tooth.

### Brief Description of the Drawings

Fig. 1 is a flowchart of a method for restoring an edge of a tooth, the edge being changed by scanning, according to a first embodiment of the present invention;
Fig. 2 is a flowchart for illustrating a step of restoring an edge of a tooth based on a first profile curve extended and a second profile curve extended;
Fig. 3A is a schematic diagram illustrating an example of a real tooth;
Fig. 3B is a schematic diagram illustrating an example of scan data on an abutment tooth before restoration;
Fig. 4 is a schematic diagram illustrating a step of deleting an edge of a tooth of scan data;
Fig. 5 is a schematic diagram illustrating a step of extracting a boundary line;
Fig. 6A is a plan view illustrating an example of first data on multiple plates that are radially disposed;
Fig. 6B is a side view illustrating an example of first data on multiple plates that are radially disposed;
Fig. 7A is a schematic diagram illustrating a step of disposing first data while superimposing the first data on scan data;
Fig. 7B is a schematic diagram illustrating a step of disposing first data while superimposing the first data on scan data;
Fig. 8 is a schematic diagram illustrating a step of creating a first profile curve and a second profile curve;
Fig. 9 is a schematic diagram illustrating a step of extending a first profile curve and a second profile curve;
Fig. 10 is a schematic diagram illustrating an intersection line;
Fig. 11 is a schematic diagram illustrating an edge restored based on a boundary line and an intersection line;
Fig. 12 is a schematic diagram illustrating an example of scan data on an abutment tooth after restoration;
Fig. 13A is a schematic diagram illustrating an example of an edge of a real tooth;
Fig. 13B is a schematic diagram illustrating an example of an edge of a tooth before restoration;
Fig. 13C is a schematic diagram illustrating a step of deleting an edge of a tooth;
Fig. 13D is a schematic diagram illustrating a step of extracting a boundary line;
Fig. 13E is a schematic diagram illustrating a step of creating a first profile curve and a second profile curve;
Fig. 13F is a schematic diagram illustrating a step of extending the first profile curve and the second profile curve;
Fig. 13G is a schematic diagram illustrating a step of calculating an intersection of a first profile curve and a second profile curve;
Fig. 13H is a schematic diagram illustrating a step of restoring an edge of a tooth;
Fig. 13I is a schematic diagram illustrating an example of an edge of a tooth after restoration;
Fig. 14 is a schematic diagram illustrating edges of a tooth before restoration and after restoration;
Fig. 15 is a schematic block diagram illustrating a configuration of an apparatus that restores an edge of a tooth changed by scanning according to the first embodiment of the present invention;
Fig. 16A is a schematic diagram illustrating an example of scan data on a cavity forming tooth before restoration;
Fig. 16B is a schematic diagram illustrating an example of scan data of the cavity forming tooth after restoration;
Fig. 17A is a schematic diagram illustrating an example of scan data on a tooth having a maintenance groove before restoration;
Fig. 17B is a schematic diagram illustrating an example of the scan data on the tooth having a maintenance groove after restoration;
Fig. 18A is a schematic diagram illustrating an example of scan data on a dentition before restoration;
Fig. 18B is a schematic enlarged view of a part Z1 of the scan data illustrated in Fig. 18A;
Fig. 18C is a schematic diagram illustrating an example of scan data on the dentition after restoration;
Fig. 18D is a schematic enlarged view of a part Z2 of the scan data illustrated in Fig. 18C;
Fig. 18E is a schematic sectional view taken along line A-A illustrated in Fig. 18D;
Fig. 18F is a schematic enlarged view of a section Z3 illustrated in Fig. 18E;
Fig. 19 is a flowchart of a method for restoring an edge of a tooth, the edge being changed by scanning, according to a second embodiment of the present invention;
Fig. 20 is a flowchart illustrating a step of restoring an edge of a tooth based on a first profile curve extended, a second profile curve extended, a third profile curve extended, and a fourth profile curve extended;
Fig. 21 is a schematic diagram illustrating an example of scan data on a cavity forming tooth before restoration;
Fig. 22 is a schematic diagram illustrating a step of disposing first data while superimposing the first data on scan data;
Fig. 23 is a perspective view illustrating an example of second data in which multiple plates are arranged;
Fig. 24 is a schematic diagram illustrating a step of disposing second data while superimposing the second data on scan data;
Fig. 25 is a schematic diagram illustrating a step of creating a third profile curve and a fourth profile curve extended;
Fig. 26A is a flowchart of a method for restoring an edge of a tooth, the edge being changed by scanning, according to a third embodiment of the present invention;
Fig. 26B is a flowchart of a method for restoring an edge of a tooth, the edge being changed by scanning, according to the third embodiment of the present invention;
Fig. 27 is a flowchart illustrating a step of restoring an edge of a tooth based on a first profile curve extended, a second profile curve extended, a third profile curve extended, a fourth profile curve extended, a fifth profile curve extended, and a sixth profile curve extended;
Fig. 28 is a schematic diagram illustrating a step of disposing third data while superimposing the third data on scan data;
Fig. 29 is a flowchart of a method for restoring an edge of a tooth, the edge being changed by scanning, according to a fourth embodiment of the present invention;
Fig. 30A is a schematic diagram illustrating an example of scan data on an edge of a tooth before restoration;
Fig. 30B is a schematic diagram illustrating a step of drawing an edge line of a tooth;
Fig. 30C is a schematic diagram illustrating a step of deleting an edge of a tooth;
Fig. 30D is a schematic diagram illustrating an example of fourth data in which multiple plates are arranged;
Fig. 30E is a schematic diagram illustrating a step of disposing fourth data while superimposing the fourth data on scan data;
Fig. 31 is a photograph of an abutment tooth model to which a coping fabricated in a comparative example 1 is attached, the photograph being taken from a buccal side;
Fig. 32 is a photograph of an abutment tooth model to which a coping fabricated in an example 1 is attached, the photograph being taken from a buccal side;
Fig. 33 is a photograph of the abutment tooth model to which the coping fabricated in the comparative example 1 is attached, the photograph being taken from a lingual side; and
Fig. 34 is a photograph of the abutment tooth model to which the coping fabricated in the example 1 is attached, the photograph being taken from a lingual side.

### Detailed Description

### (Background to present invention)

JP 2019-080839 A discloses a method for estimating and restoring a shape near a finish line and the finish line that are originally included in an abutment tooth or an abutment tooth model from scan data obtained by scanning the abutment tooth or the abutment tooth model.

Unfortunately, although the method disclosed in JP 2019-080839 A can be applied to estimation and restoration of an edge of an abutment tooth or an abutment tooth model, the method is not suitable for estimating and restoring an edge of a tooth having a complicated shape. For example, the method allows even a cavity forming tooth or a tooth having a maintenance groove to have a margin of the cavity or a margin of the maintenance groove, the margin being rounded more than a real shape by scanning. The method disclosed in JP 2019-080839 A causes a problem in that scan data on an edge having a complicated shape such as a margin of a cavity or a margin of a maintenance groove is less likely to be restored in a form closer to a real object.

The method disclosed in JP 2019-080839 A also causes a problem in that processing time for performing estimation and restoration is likely to increase, and thus a form of the edge of the tooth cannot be restored in a short time.

Thus, the present inventors have reached the invention described below to solve these problems.

Hereinafter, the present invention will be described with reference to the drawings. All the drawings below denote identical or corresponding parts with respective identical reference numerals, and duplicated description is eliminated.

### (First embodiment)

### [Method for restoring edge of tooth changed by scanning]

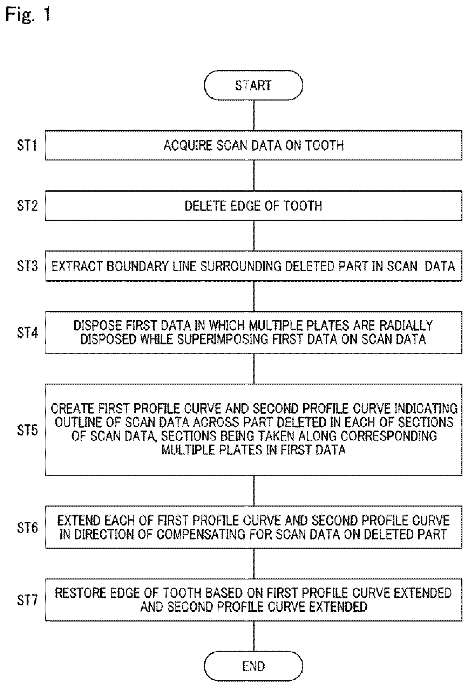

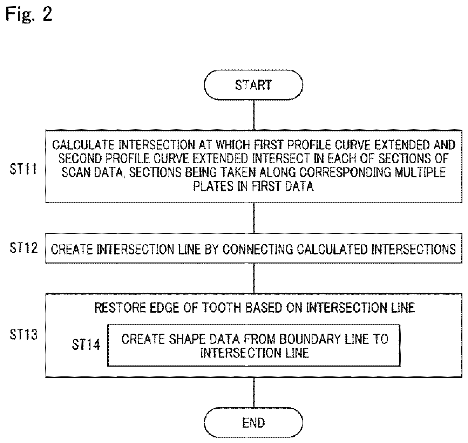

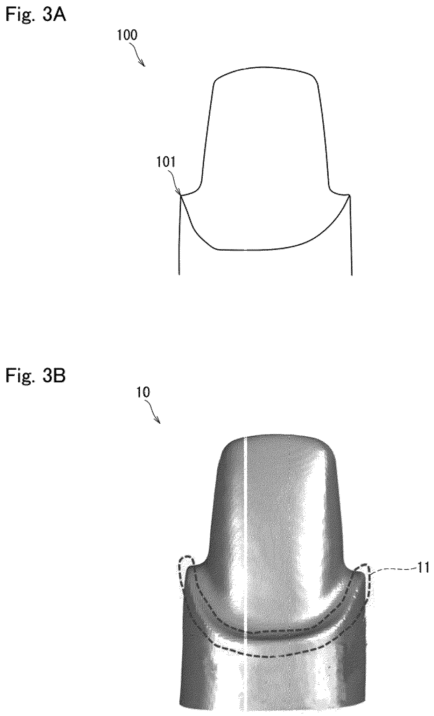

Fig. 1 is a flowchart of a method for restoring an edge of a tooth, the edge being changed by scanning, according to a first embodiment of the present invention. Fig. 2 is a flowchart for illustrating a step of restoring an edge of a tooth based on a first profile curve extended and a second profile curve extended. Steps illustrated in Figs. 1 and 2 are executed by a computer. Figs. 3A to 12 are schematic diagrams for illustrating each step illustrated in Figs. 1 and 2. The first embodiment will be described about an example of restoring an edge of an abutment tooth.

As illustrated in Fig. 1, scan data on a tooth is acquired in step ST1. For example, the tooth is scanned by a scanner to acquire scan data on the tooth in step ST1. Available examples of the scanner include an intraoral scanner for scanning an oral cavity of a patient, and a desktop scanner for scanning a model of a tooth. Scanning a tooth includes scanning a real tooth or scanning a model of a tooth.

For example, the scan data on a tooth may be obtained by directly scanning an oral cavity of a patient with an intraoral scanner. Scan data on a tooth in an abutment tooth model may be acquired by scanning the abutment tooth model installed on a stage with a desktop scanner. Alternatively, scan data on a tooth may be acquired by scanning an oral cavity of a patient from outside the oral cavity using an intraoral scanner.

Scan data on a tooth may be also acquired by receiving the scan data from an external device using a communication device.

The scan data acquired in step ST1 is an aggregate of points, and is positional information on each of the points. The scan data is often output in a form, such as point group data, STL data on a triangle formed by three adjacent points, including normal vector information on each of front and back surfaces of the triangle, wire frame data formed by triangles that are each formed by connecting adjacent points, or polygon data in which a surface is formed on each triangle of a wire frame. STL data among them is most often used in dentistry, and is widely used as common format data with high compatibility among different manufacturers.

Fig. 3A is a schematic diagram illustrating an example of a real tooth. Fig. 3B is a schematic diagram illustrating an example of scan data on an abutment tooth before restoration. Fig. 3B is scan data 10 obtained by scanning a real tooth 100 illustrated in Fig. 3A with a scanner. As illustrated in Figs. 3A and 3B, the scan data 10 shows an edge 11 that is rounded compared to an edge 101 of the real tooth 100.

Returning to Fig. 1, step ST2 is performed to delete the edge 11 of the tooth in the scan data 10. For example, the edge 11 of the tooth is deleted based on information received from a user in step ST2. Specifically, the user inputs a region of the edge 11 using an input interface. The edge 11 is specified and deleted from the scan data 10 based on the information received from the user.

Alternatively, the edge 11 of the scan data 10 may be automatically detected, and the edge 11 detected may be deleted, in step ST2. For example, the edge 11 may be detected based on a curvature or a change in curvature of the scan data 10.

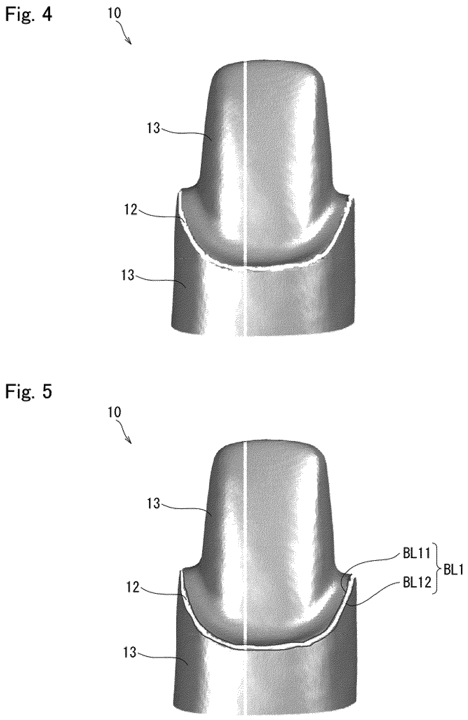

Fig. 4 is a schematic diagram illustrating a step of deleting an edge of a tooth of scan data. As illustrated in Fig. 4, the edge 11 of the scan data 10 is deleted in step ST2. Specifically, the edge 11 is deleted, and a deleted part 12 and a remaining part 13 are formed of the scan data 10. The edge 11 is formed in an annular shape in the example illustrated in Fig. 4, so that the deleted part 12 has an annular shape.

Returning to Fig. 1, a boundary line surrounding the deleted part 12 is extracted of the scan data 10 in step ST3. For example, a boundary line is extracted by detecting a boundary between the deleted part 12 and the remaining part 13 of the scan data 10 in step ST3.

Fig. 5 is a schematic diagram illustrating a step of extracting a boundary line. As illustrated in Fig. 5, a boundary line BL1 surrounding the deleted part 12 is extracted of the scan data 10 in step ST3. The boundary line BL1 defines the deleted part 12. The boundary line BL1 indicates a boundary between the deleted part 12 and the remaining part 13 in an external shape of the tooth, or a part representing an outline.

The deleted part 12 has an annular shape of the scan data 10 on the abutment tooth, so that the boundary line BL1 includes a first boundary line BL11 and a second boundary line BL12. The first boundary line BL11 and the second boundary line BL12 are formed across the deleted part 12.

The first boundary line BL11 defines an inner boundary of the deleted part 12, and the second boundary line BL12 defines an outer boundary of the deleted part 12. In other words, the first boundary line BL11 is formed closer to a crown than the deleted part 12, and the second boundary line BL12 is formed closer to a tooth root than the first boundary line BL11 from the deleted part 12.

When the scan data 10 is STL data, the boundary line BL1 may be extracted by being converted into polysurface data. Converting the data into the polysurface data facilitates extraction of the boundary line BL1.

Returning to Fig. 1, first data on multiple plates radially disposed is disposed while being superimposed on the scan data 10 in step ST4.

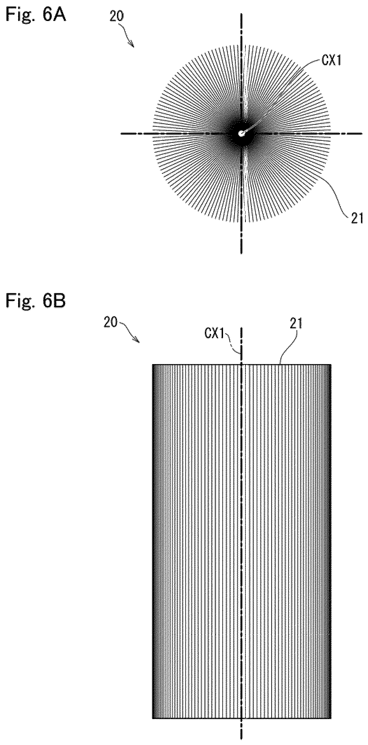

Figs. 6A and 6B each illustrate an example of first data on multiple plates that are radially disposed. Fig. 6A illustrates a plan view of the first data, and Fig. 6B illustrates a side view of the first data. As illustrated in Figs. 6A and 6B, the first data 20 includes multiple plates 21. The multiple plates 21 are radially disposed. The multiple plates 21 intersect at a center axis CX1 of the first data 20 and are disposed at equal intervals. The multiple plates 21 are identical in shape and size. Each of the multiple plates 21 has a rectangular shape.

The first data 20 is used to cut the scan data 10 by each of the multiple plates 21 to acquire sectional data of the scan data 10. The first profile curve and the second profile curve to be described later are created based on the sectional data that is of the scan data 10 and acquired using the first data 20.

For example, the number of the multiple plates 21 is 60 or more and 3500 or less. The number of the multiple plates 21 is preferably 90 or more and 600 or less. As a result, the edge 11 of the tooth can be restored closer to the real object. The multiple plates 21 are disposed at an interval of 1 µm or more and 400 µm or less. The number of the multiple plates 21 may be preliminarily set for each tooth shape or may be set by input of a user.

As illustrated in Fig. 6A, the first data 20 has a circular shape in plan view. As illustrated in Fig. 6B, the first data 20 has a rectangular shape in side view. The first data 20 is designed to have a shape and a dimension that allow the first data 20 to be superimposed on the entire scan data 10.

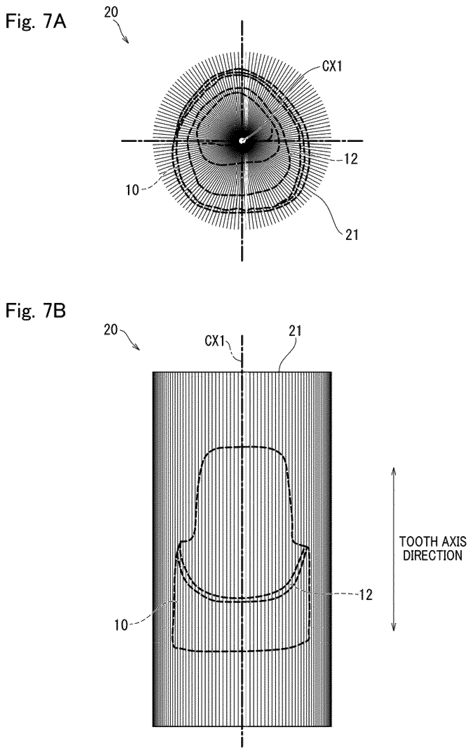

Figs. 7A and 7B are each a schematic diagram illustrating a step of disposing first data while superimposing the first data on scan data. Fig. 7A is a diagram illustrating a step of disposing first data while superimposing the first data on scan data as viewed vertically. Fig. 7B is a diagram illustrating the step of disposing the first data while superimposing the first data on the scan data as viewed laterally. As illustrated in Figs. 7A and 7B, the first data 20 is disposed to be superimposed on the scan data 10 while including the entire scan data 10 in step ST4. For example, the center axis CX1 of the first data 20 is disposed along a tooth axis direction of the tooth of the scan data 10 in step ST4. The first data 20 is disposed with the center axis CX1 at the center of the tooth of the scan data 10 when the scan data 10 is viewed in plan view, or when viewed from the crown of the tooth toward the tooth root thereof.

Returning to Fig. 1, step ST5 is performed to create the first profile curve and the second profile curve indicating an outline of the scan data 10 across the part 12 deleted in each of the sections of the scan data 10, the sections being taken along the corresponding multiple plates 21 in the first data 20.

The first data 20 is disposed to pass through the scan data 10. Thus, the scan data 10 can be cut by the multiple plates 21 of the first data 20, and sectional data of the scan data 10 can be acquired.

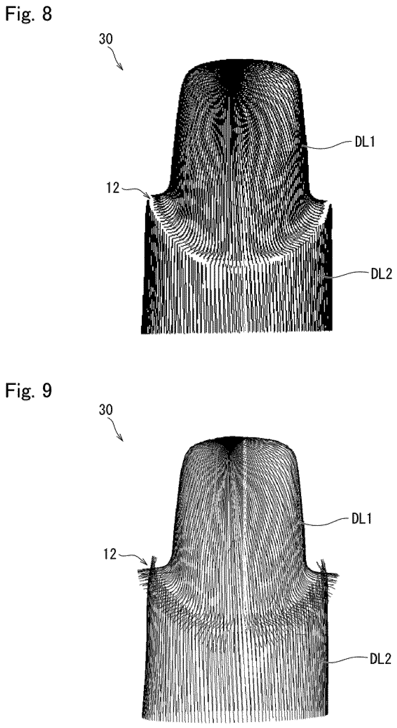

Fig. 8 is a schematic diagram illustrating a step of creating the first profile curve and the second profile curve. As illustrated in Fig. 8, step ST5 is performed to extract the outline of the tooth in each of the sections taken along the corresponding multiple plates 21 of the scan data 10, and create a first profile curve DL1 and a second profile curve DL2 based on the outline. As a result, profile curve data 30 of the scan data 10 is acquired. The profile curve data 30 is formed by the first profile curve DL1 and the second profile curve DL2 created in each section.

The outline of the tooth indicates a contour of the tooth of the scan data 10. The scan data 10 includes the deleted part 12 in which no outline exists. Thus, no profile curve is created in the deleted part 12. As a result, the first profile curve DL1 and the second profile curve DL2 are created across the deleted part 12 in each section of the scan data 10.

Fig. 8 illustrates an example in which the first profile curve DL1 is created closer to the crown than the deleted part 12, and the second profile curve DL2 is created closer to the tooth root than the deleted part 12.

Returning to Fig. 1, step ST6 is performed to extend each of the first profile curve DL1 and the second profile curve DL2 in a direction of compensating for the scan data 10 on the deleted part 12.

Fig. 9 is a schematic diagram illustrating a step of extending the first profile curve and the second profile curve. As illustrated in Fig. 9, step ST6 is performed to extend each of the first profile curve DL1 and the second profile curve DL2 in a direction of compensating for the scan data 10 on the deleted part 12 in the profile curve data 30 of the scan data 10.

For example, the first profile curve DL1 is extended with a terminal end to be connected to the deleted part 12 while a curvature or a change in curvature at the terminal end is maintained. The second profile curve DL2 is extended with a terminal end to be connected to the deleted part 12 while a curvature or a change in curvature at the terminal end is maintained. For example, the terminal end of the first profile curve DL1 is located close to the deleted part 12, and is a point at which the first profile curve DL1 and the first boundary line BL11 intersect. The terminal end of the second profile curve DL2 is located close to the deleted part 12, and is a point at which the second profile curve DL2 and the second boundary line BL12 intersect.

For example, the first profile curve DL1 is extended from the terminal end of the first profile curve DL1 by 0.5 mm or more and 1.0 mm or less. The first profile curve DL1 is preferably extended by 0.64 mm from the terminal end of the first profile curve DL1. The second profile curve DL2 is extended from the terminal end of the second profile curve DL2 by 0.5 mm or more and 1.0 mm or less. The second profile curve DL2 is preferably extended by 0.64 mm from the terminal end of the second profile curve DL2.

Returning to Fig. 1, step ST7 is performed to restore the edge 11 of the tooth based on the first profile curve DL1 extended and the second profile curve DL2 extended. Step ST7 will be described with reference to Fig. 2.

As illustrated in Fig. 2, step ST11 is performed to calculate an intersection at which the first profile curve DL1 extended and the second profile curve DL2 extended intersect in each of the sections of the scan data 10, the sections being taken along the corresponding multiple plates 21 in the first data 20.

The first profile curve DL1 and the second profile curve DL2, which are extended in step ST6, intersect each other in the deleted part 12. Step ST11 is performed to calculate an intersection of the first profile curve DL1 extended and the second profile curve DL2 extended in each of the sections.

Step ST12 is performed to create an intersection line by connecting the calculated intersections. Step ST12 is performed to create an intersection line by three-dimensionally connecting the intersections calculated in the respective sections.

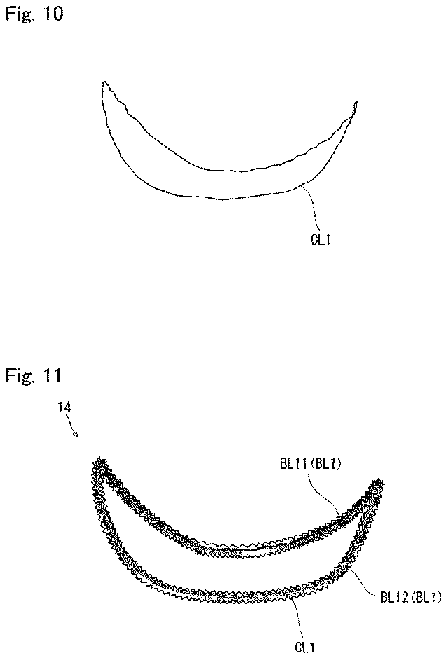

Fig. 10 is a schematic diagram illustrating the intersection line. As illustrated in Fig. 10, a closed intersection line CL1 is created by three-dimensionally connecting the intersections calculated in the respective sections.

Returning to Fig. 2, step ST13 is performed to restore the edge 11 of the tooth based on the intersection line CL1. Specifically, step ST13 includes step ST14 of creating shape data from the boundary line BL1 to the intersection line CL1.

Step ST14 will be described with reference to Fig. 11. Fig. 11 is a schematic diagram illustrating the edge restored based on the boundary line and the intersection line. As illustrated in Fig. 11, step ST14 is performed to create the shape data from the boundary line BL1 to the intersection line CL1. Specifically, shape data from the first boundary line BL11 to the intersection line CL1 and shape data from the second boundary line BL12 to the intersection line CL1 are created. As a result, an edge 14 can be restored to the deleted part 12.

For example, shape data that fits through a contour curve defining the shape from the boundary line BL1 to the intersection line CL1 may be created in the creation of the shape data from the boundary line BL1 to the intersection line CL1. The shape data from the boundary line BL1 to the intersection line CL1 may be created along the first profile curve DL1 extended and the second profile curve DL2 extended in each of the sections in the creation of the shape data from the boundary line BL1 to the intersection line CL1. Alternatively, the shape data may be created to cause a distance between the boundary line BL1 and the intersection line CL1 to be shortest in each of the sections. The creation of the shape data is not limited thereto, and may be performed by any method capable of creating the shape data close to a real edge 101.

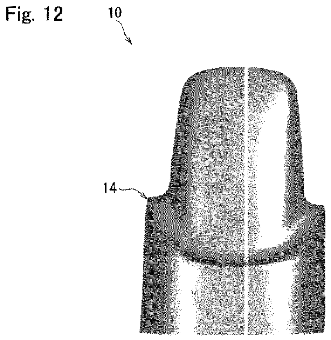

Fig. 12 is a schematic diagram illustrating an example of scan data on an abutment tooth after restoration. As illustrated in Fig. 12, the edge 14 in the restored scan data 10 has a sharp shape as compared with the edge 11 before restoration, and has a form closer to the real object.

The scan data 10 including the edge 14 after restoration can be acquired by joining the restored edge 14 to the deleted part 12 of the scan data 10.

When the restored edge 14 is polysurface data, the restored edge 14 may be converted into mesh data, and then may be matched and combined with the deleted part 12 of the scan data 10.

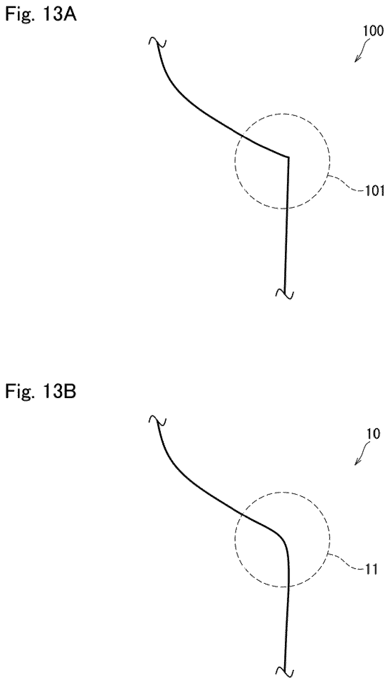

With reference to Figs. 13A to 13I, a state of restoration of the edge of the tooth will be further described. Figs. 13A to 13I are schematic diagrams illustrating a series of steps of restoring the edge of the tooth. Figs. 13A to 13I are two-dimensional image diagrams of a series of steps in which the edge is restored by the method for restoring an edge of a tooth changed by scanning described above.

Fig. 13A is a schematic diagram illustrating an example of an edge of a real tooth. The edge 101 of the real tooth 100 illustrated in Fig. 13A is scanned by a scanner to acquire scan data.

Fig. 13B is a schematic diagram illustrating scan data obtained by scanning the edge of the real tooth illustrated in Fig. 13A and illustrating scan data on the tooth before restoration. As illustrated in Fig. 13B, the scan data 10 on the tooth before restoration includes the edge 11 rounded more than the edge 101 of the real tooth 100 illustrated in Fig. 13A.

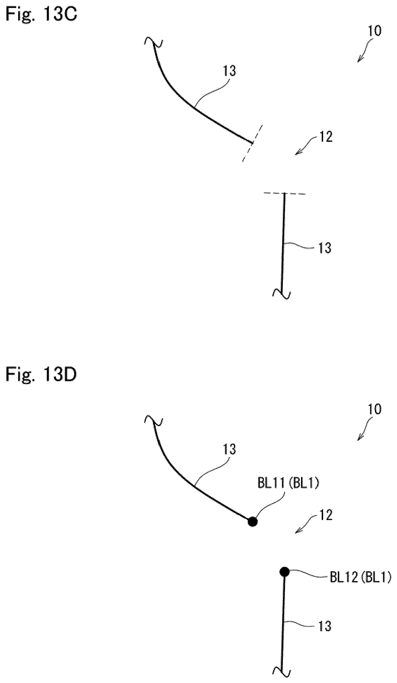

Fig. 13C is a schematic diagram illustrating a step of deleting an edge from scan data. As illustrated in Fig. 13C, the edge 11 of the scan data 10 is deleted. The scan data 10 includes the part 12 obtained by deleting the edge 11 of the scan data.

Fig. 13D is a schematic diagram illustrating a step of extracting a boundary line. As illustrated in Fig. 13D, the boundary line BL1 is extracted by detecting a boundary between the deleted part 12 and the remaining part 13 in the scan data 10. Specifically, the first boundary line BL11 and the second boundary line BL12 are extracted across the deleted part 12. The boundary line BL1 extends in a direction on the paper surface.

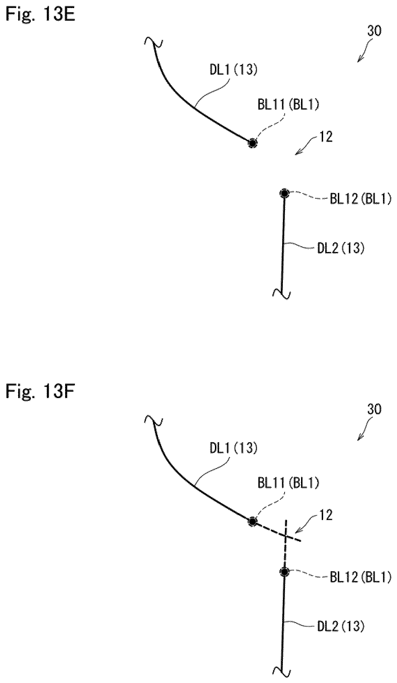

Fig. 13E is a schematic diagram illustrating a step of creating the first profile curve and the second profile curve. Fig. 13E illustrates the first profile curve DL1 and the second profile curve DL2 that are created in each of the sections of the scan data 10, the sections being taken along the corresponding multiple plates 21 of the first data 20 by disposing the first data 20 in the scan data 10. Specifically, the first profile curve DL1 and the second profile curve DL2 indicating the outline of the scan data 10 are created across the part 12 deleted in each of the sections of the scan data 10, the sections being taken along the corresponding multiple plates 21 of the first data 20. The outline of the scan data 10 is a contour line of the part 13 remaining in each of the sections.

Fig. 13F is a schematic diagram illustrating a step of extending the first profile curve and the second profile curve. As illustrated in Fig. 13F, the first profile curve DL1 and the second profile curve DL2 are each extended in the deleted part 12 in a direction of compensating for the scan data 10 on the deleted part 12.

For example, the first profile curve DL1 is extended in each of the sections of the scan data 10, the sections being taken along the corresponding multiple plates 21 of the first data 20 while curvature or a rate of change in the curvature of the first profile curve DL1 at a point where the first profile curve DL1 intersects the first boundary line BL11 is maintained. The second profile curve DL2 is also extended in each of the sections of the scan data 10, the sections being taken along the corresponding multiple plates 21 of the first data 20 while curvature or a rate of change in the curvature of the second profile curve DL2 at a point where the second profile curve DL2 intersects the second boundary line BL12 is maintained.

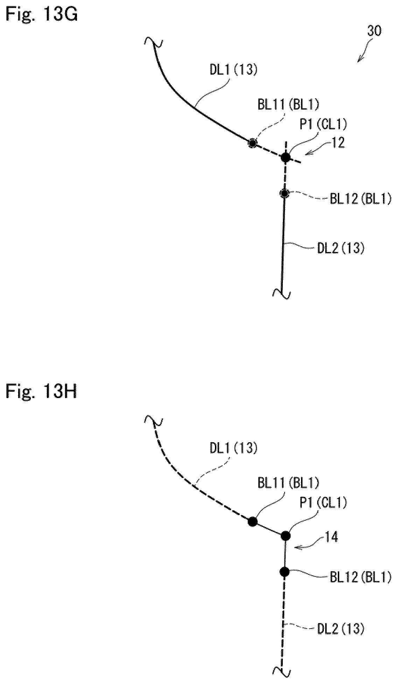

Fig. 13G is a schematic diagram illustrating a step of calculating an intersection of the first profile curve and the second profile curve. As illustrated in Fig. 13G, an intersection P1 at which the first profile curve DL1 extended and the second profile curve DL2 extended intersect is calculated in each of the sections.

Intersections P1 calculated in the respective sections are three-dimensionally connected to create the intersection line CL1. The intersection line CL1 corresponds to an edge after restoration.

Fig. 13H is a schematic diagram illustrating a step of restoring an edge of a tooth. As illustrated in Fig. 13H, the edge 14 is restored based on the intersection line CL1. Specifically, the edge 14 restored based on the boundary line BL1 and the intersection line CL1 is formed in the deleted part 12. The restored edge 14 is obtained by creating shape data from the boundary line BL1 to the intersection line CL1. For example, the restored edge 14 is created in the deleted part 12 by creating shape data from the boundary line BL1 to the intersection line CL1 along the first profile curve DL1 extended and the second profile curve DL2 extended in each of the sections.

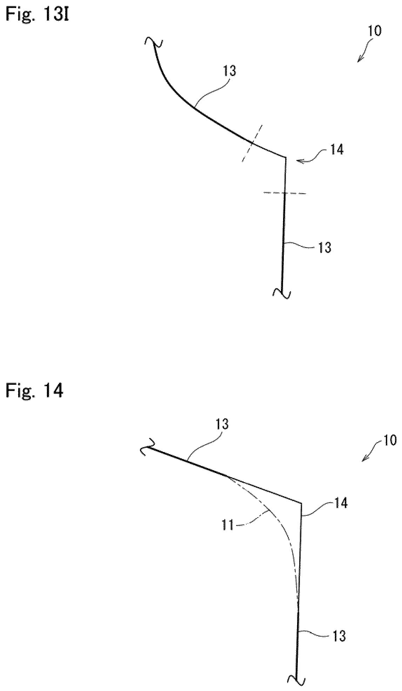

Fig. 13I is a schematic diagram illustrating an example of an edge of a tooth after restoration. As illustrated in Fig. 13I, the restored edge 14 is disposed in the part 12 deleted in the scan data 10, and is joined to the scan data 10.

Fig. 14 is a schematic diagram illustrating edges of a tooth before restoration and after restoration. Fig. 14 illustrates an alternate long and short dash line indicated by a reference numeral 11 that indicates an edge scanned before restoration, and a solid line indicated by a reference numeral 14 that indicates the edge 14 after restoration. As illustrated in Fig. 14, the scan data 10 including the sharp edge 14 closer to a form of the real object than the edge 11 before restoration is restored.

### [Restoration apparatus]

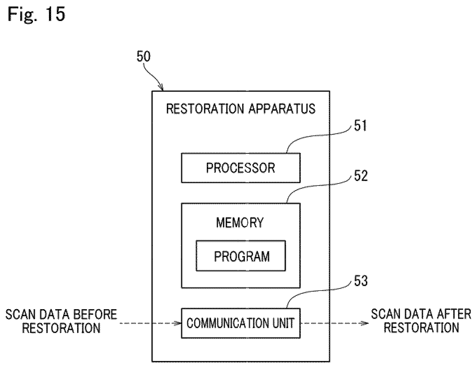

Fig. 15 is a schematic block diagram illustrating a configuration of an apparatus that restores an edge of a tooth changed by scanning according to the first embodiment of the present invention.

As illustrated in Fig. 15, a restoration apparatus 50 performs the above-described method, acquires the scan data 10 before restoration, and outputs the scan data 10 after restoration in which the edge 11 is restored. The restoration apparatus 50 is a computer, for example.

For example, the scan data 10 before restoration is acquired by the scanner and transmitted to the restoration apparatus 50. The scan data 10 after restoration is transmitted to a fabricating device or the like for fabricating a prosthesis. The restoration apparatus 50 may create design data for fabricating a prosthesis based on the scan data 10 after restoration. In this case, the restoration apparatus outputs the design data on the prosthesis.

The restoration apparatus 50 includes one or more processors 51, a memory 52, and a communication unit 53.

The processor 51 is a central processing unit (CPU), a microprocessor, or other processing unit capable of executing computer-executable instructions, for example. The processor 51 is capable of executing an instruction stored in the memory 52.

The memory 52 stores data of the restoration apparatus 50. The memory 52 includes computer recording media, such as a RAM, a ROM, an EEPROM, a flash memory or other memory technology, a CD-ROM, a DVD or other optical disk storage, a magnetic cassette, a magnetic tape, a magnetic disk storage or other magnetic storage device, and any medium that can be used to store desired information and that can be accessed by the restoration apparatus 50.

The memory 52 stores a program for executing the above-described method. The memory 52 may also store a program for creating design data on a prosthetic device.

The communication unit 53 communicates with an external device. The communication unit 53 includes a circuit for communicating with the external device in conformity with a predetermined communication standard. Examples of the predetermined communication standard include LAN, Wi-Fi (registered trademark), Bluetooth (registered trademark), USB, HDMI (registered trademark), controller area network (CAN), and serial peripheral interface (SPI).

The communication unit 53 receives scan data from a scanner via a network, for example. The communication unit 53 also transmits the scan data 10 after restoration on the prosthetic device to the fabricating device or the like via the network, for example.

### [Effects]

The method for restoring an edge of a tooth changed by scanning according to the first embodiment of the present invention enables achieving effects below.

The method according to the first embodiment of the present invention is a method for restoring a form of an edge of a tooth changed by scanning using a computer, and includes steps ST1 to ST7 performed by the computer. Step ST1 is performed to acquire scan data 10 on a tooth. Step ST2 is performed to delete scan data on the edge 11 of the tooth in the scan data 10. Step ST3 is performed to extract the boundary line BL1 surrounding the deleted part 12 in the scan data 10. Step ST4 is performed to dispose the first data 20 in which the multiple plates 21 are radially disposed while superimposing the first data 20 on the scan data 10. Step ST5 is performed to create the first profile curve DL1 and the second profile curve DL2 indicating an outline of the scan data 10 across the part 12 deleted in each of the sections of the scan data 10, the sections being taken along the corresponding multiple plates 21 of the first data 20. Step ST6 is performed to extend each of the first profile curve DL1 and the second profile curve DL2 in a direction of compensating for the scan data on the part 12 deleted in each of the sections of the scan data 10, the sections being taken along the corresponding multiple plates 21 of the first data 20. Step ST7 is performed to restore the edge 11 of the tooth based on the first profile curve DL1 and the second profile curve DL2 that are extended in each of the sections of the scan data 10, the sections being taken along the corresponding multiple plates 21 of the first data 20.

This configuration enables improvement in quality of the scan data 10 on a tooth. Specifically, an edge rounded by scanning can be restored to a form close to a real object. The method according to the first embodiment can be applied to various edges of teeth. For example, an edge having a complex shape such as a margin shape of a cavity or a maintenance groove, dentition data, or the like can also be restored to a form close to a real object.

The method according to the first embodiment enables an edge to be restored in a short time. For example, when an edge of an abutment tooth is restored, the edge can be restored within 10 minutes.

Step ST7 of restoring the edge 11 of the tooth includes step ST11 of calculating an intersection, step ST12 of creating an intersection line, and step ST13 of restoring the edge 11. Step ST11 is performed to calculate an intersection P1 at which the first profile curve DL1 extended and the second profile curve DL2 extended intersect in each of the sections of the scan data 10, the sections being taken along the corresponding multiple plates 21 of the first data 20. Step ST12 is performed to create an intersection line CL1 by connecting the calculated intersections P1. Step ST13 is performed to restore the edge 11 of the tooth based on the intersection line. This configuration enables restoring the edge 11 to a form closer to the real object, and further improving the scan data 10 in quality.

Step ST13 of restoring the edge 11 includes step ST14 of creating shape data from the boundary line BL1 to the intersection line CL1. This configuration enables restoring the edge 11 to a form closer to the real object, and further improving the scan data 10 in quality. This configuration also enables the edge 11 to be restored in a short time.

Step ST6 of extending the first profile curve DL1 and the second profile curve DL2 includes a step of extending the first profile curve and a step of extending the second profile curve DL2. The step of extending the first profile curve is performed to extend the first profile curve DL1 while maintaining curvature or a rate of change in the curvature of the first profile curve DL1 at a terminal end of the first profile curve DL1 in each of the sections of the scan data 10, the sections being taken along the corresponding multiple plates 21 of the first data 20. The step of extending the second profile curve DL2 is performed to extend the second profile curve DL2 while maintaining curvature or a rate of change in the curvature of the second profile curve DL2 at a terminal end of the second profile curve DL2 in each of the sections of the scan data 10, the sections being taken along the corresponding multiple plates 21 of the first data 20. This configuration enables restoring the edge 11 to a form closer to the real object, and further improving the scan data 10 in quality.

The first data 20 includes the center axis CX1 where the multiple plates 21 intersect. Step ST4 of disposing the first data 20 while superimposing the first data 20 on the scan data 10 includes a step of disposing the center axis CX1 of the first data 20 along the tooth axis direction of the tooth. This configuration enables the first profile curve DL1 and the second profile curve DL2 indicating the outline of the scan data 10 to be created with high accuracy. As a result, the edge 11 can be restored to a form closer to the real object, and thus the scan data 10 can be further improved in quality.

The step of disposing the center axis CX1 of the first data 20 along the tooth axis direction of the tooth includes a step of disposing the center axis CX1 of the first data 20 at the center of the tooth as viewed from a direction from the crown of the tooth toward the tooth root thereof. This configuration enables the first profile curve DL1 and the second profile curve DL2 to be created with higher accuracy. As a result, the edge 11 can be restored to a form closer to the real object, and thus the scan data 10 can be further improved in quality.

The number of the multiple plates 21 of the first data 20 is 60 or more and 3500 or less. The number of the multiple plates 21 is preferably 90 or more and 600 or less. This configuration enables the first profile curve DL1 and the second profile curve DL2 to be created with higher accuracy. As a result, the edge 11 of the tooth can be restored closer to the real object, and thus the scan data 10 can be further improved in quality.

The multiple plates of the first data are disposed at equal intervals. This configuration enables the first profile curve DL1 and the second profile curve DL2 to be created with higher accuracy. As a result, the edge 11 of the tooth can be restored closer to the real object, and thus the scan data 10 can be further improved in quality.

The restoration apparatus 50 according to the first embodiment includes the one or more processors 51 and the memory 52 that stores an instruction executable by the one or more processors 51. The instruction includes the steps of the method described above. This configuration achieves an effect similar to the effect of the method described above.

Although the first embodiment describes an example in which the method includes step ST3 of extracting the boundary line BL1, the present invention is not limited thereto. For example, the method may not include step ST3 of extracting the boundary line BL1. In this case, step ST7 may be performed to create the shape data on the deleted part based on the first profile curve DL1 extended, the second profile curve DL2 extended, and the intersection line CL1.

Although the first embodiment describes an example in which each of the multiple plates 21 of the first data 20 has a rectangular shape, the present invention is not limited thereto. The shape of each of the multiple plates 21 is not limited to a rectangular shape. For example, each of the multiple plates 21 may have an elliptical shape or a polygonal shape.

Although the first embodiment describes an example in which the multiple plates 21 of the first data 20 are disposed at equal intervals, the present invention is not limited thereto. For example, the multiple plates 21 may be disposed at different intervals.

Although the first embodiment describes an example in which the edge 11 of the tooth is restored using the scan data on the abutment tooth, the invention is not limited thereto. For example, the edge 11 of the tooth may be an edge (margin part) of an abutment tooth cavity, a maintenance groove, or a dentition. The edge 11 of the tooth also may be the edge 11 of a model of a tooth.

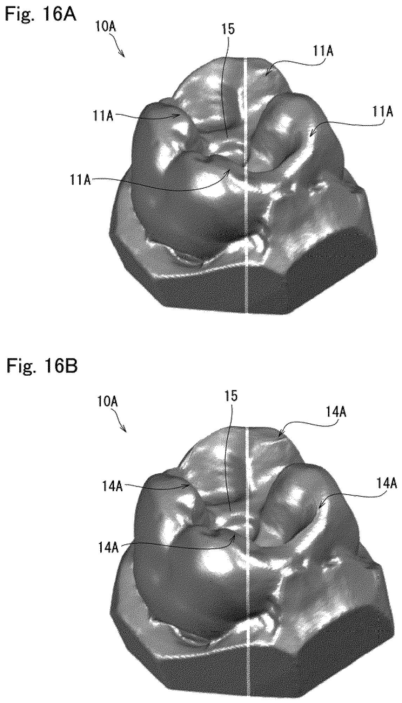

Fig. 16A is a schematic diagram illustrating an example of scan data on a cavity forming tooth before restoration. Fig. 16B is a schematic diagram illustrating an example of scan data of the cavity forming tooth after restoration. Figs. 16A and 16B respectively show an edge before restoration indicated by a reference sign "11A", and an edge after restoration indicated by a reference sign "14A". Figs. 16A and 16B illustrate examples in which the edge 11A of scan data 10A on the cavity forming tooth, or a margin of a cavity 15, is restored by the method.

When the edge 11A before restoration illustrated in Fig. 16A is compared with the edge 14A after restoration illustrated in Fig. 16B, the edge 14A after restoration has a sharper shape than the edge 11A before restoration, and is restored to a form close to a margin of the cavity 15 of a real object.

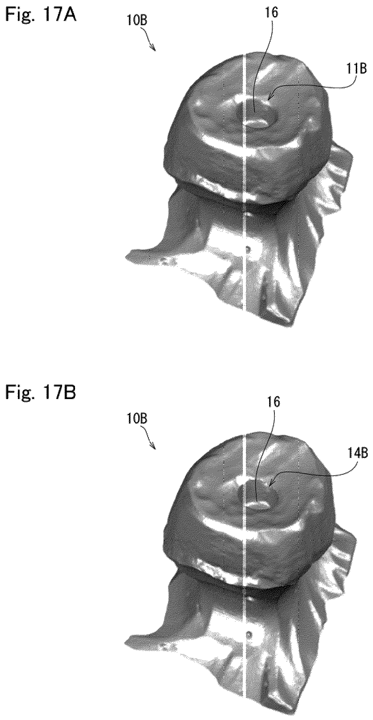

Fig. 17A is a schematic diagram illustrating an example of scan data on a tooth having a maintenance groove before restoration. Fig. 17B is a schematic diagram illustrating an example of the scan data on the tooth having a maintenance groove after restoration. Figs. 17A and 17B respectively show an edge before restoration indicated by a reference sign "11B", and an edge after restoration indicated by a reference sign "14B". Figs. 17A and 17B illustrate examples in which the edge 11B of scan data 10B on a tooth having a maintenance groove, or a maintenance groove 16, is restored by the method.

When the edge 11B before restoration illustrated in Fig. 17A is compared with the edge 14B after restoration illustrated in Fig. 17B, the edge 14B after restoration has a sharper shape than the edge 11B before restoration, and is restored to a form close to a margin of the maintenance groove 16 of a real object.

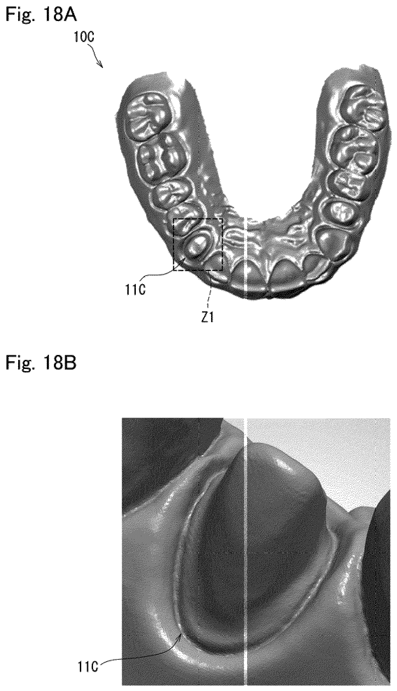

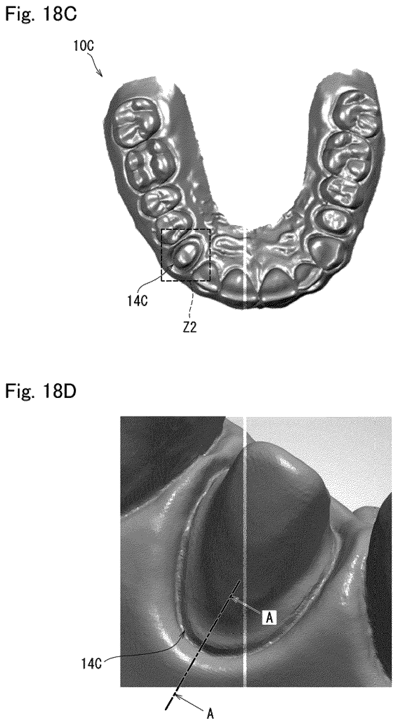

Fig. 18A is a schematic diagram illustrating an example of scan data on a dentition before restoration. Fig. 18B is an enlarged schematic diagram of a section Z1 illustrated in Fig. 18A. Fig. 18C is a schematic diagram illustrating an example of scan data on the dentition after restoration. Fig. 18D is an enlarged schematic diagram of a section Z2 illustrated in Fig. 18C. Corresponding Figs. 18A to 18D show an edge before restoration indicated by a reference sign "11C", and an edge after restoration indicated by a reference sign "14C". Figs. 18A to 18D illustrate examples in which a margin of the edge 11C of an abutment tooth of a canine, or a margin of the abutment tooth of the canine, of the scan data 10C on the dentition is restored by the method. When the method is performed, the abutment tooth of the canine is separated from the dentition. That is, the method is performed on a part where the abutment tooth of the canine is disposed in the scan data 10C on the dentition. As a result, arithmetic processing can be reduced, and thus the edge 11C can be restored in a short time. Although the abutment tooth of the canine is separated from the dentition when the method is performed in the examples illustrated in Figs. 18A to 18D, the present invention is not limited thereto. For example, the method may be performed without separating the abutment tooth from the dentition. The abutment tooth of the canine is an example, and the method may be performed on another abutment tooth.

When the edge 11C of the abutment tooth of the canine before restoration illustrated in Figs. 18A and 18B is compared with the edge 14C of the abutment tooth of the canine after restoration illustrated in Figs. 18C and 18D, the edge 14C after restoration has a sharper shape than the edge 11C before restoration, and is restored to a form close to an edge of an abutment tooth of a real canine, or a form close to a margin.

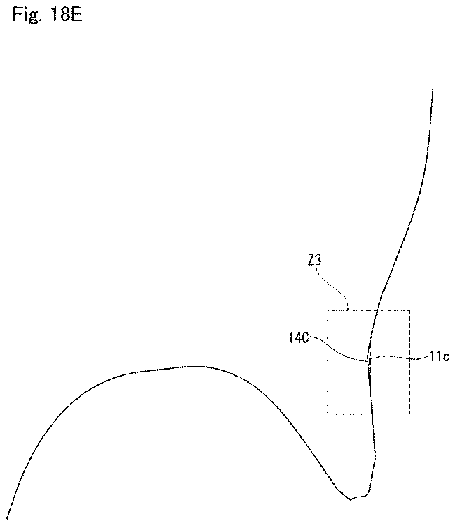

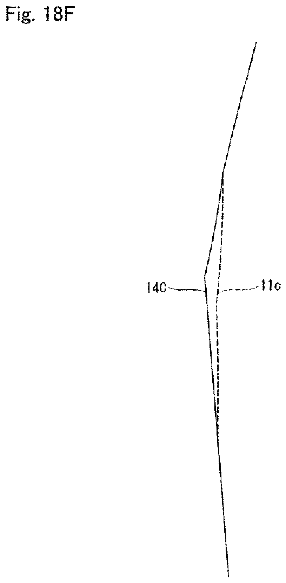

Fig. 18E is a schematic sectional view taken along line A-A illustrated in Fig. 18D. Fig. 18F is a schematic enlarged view of a section Z3 illustrated in Fig. 18E. Figs. 18E and 18F each illustrate the edge 11C before restoration indicated by a dotted line, and the edge 14C after restoration indicated by a solid line. As can be seen from Figs. 18E and 18F, the edge 14C after restoration has a sharper shape than the edge 11C before restoration, and is restored to a form close to an edge or a margin of an abutment tooth of a canine of a real object.

As described above, the method according to the first embodiment enables an edge having a complicated shape to be also restored with high accuracy.

The restoration apparatus 50 according to the first embodiment includes components that may be changed, added, deleted, integrated, or divided. For example, the restoration apparatus 50 may not include the communication unit 53. The restoration apparatus 50 may include a scanner. Alternatively, the restoration apparatus 50 may store a program for designing a prosthetic device in the memory 52.

Although the first embodiment describes examples of the method and the apparatus, the present invention is not limited thereto. The present invention may be implemented by a program for executing the method according to the first embodiment or a computer-readable recording medium in which the program for executing the method is recorded. For example, the computer-readable medium may include the method according to the first embodiment as a computer-readable instruction executable by a processor. Examples of the computer readable medium may include various types of volatile and non-volatile recording media, such as a random access memory (RAM), a read-only memory (ROM), a programmable read-only memory (PROM), an electrically programmable read-only memory (PROM), an electrically erasable read-only memory (EPROM), a flash memory, some other tangible data storage devices, some combinations thereof.

The method and the apparatus according to the first embodiment may be included in a method, an apparatus, or a system for fabricating a prosthetic device.

### (Second embodiment)

A method according to a second embodiment of the present invention will be described.

The second embodiment will be mainly described about a point different from the first embodiment. The second embodiment includes a configuration that is identical or equivalent to that of the first embodiment and that is described with the same reference numeral as that of the first embodiment. The second embodiment does not have a description duplicated with the first embodiment.

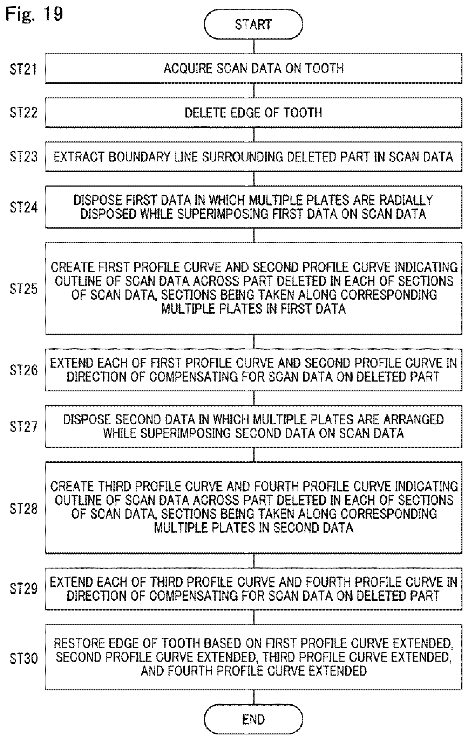

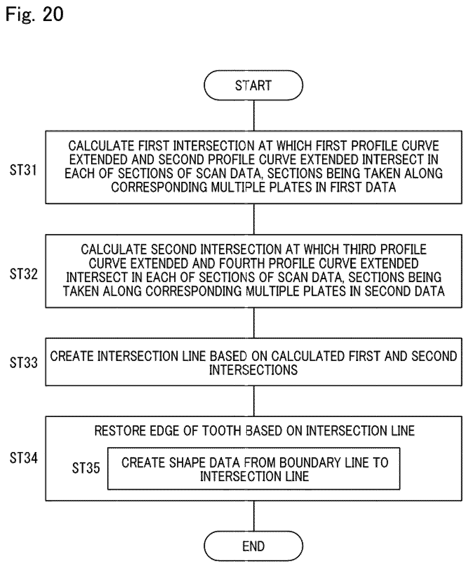

Fig. 19 is a flowchart of a method for restoring an edge of a tooth, the edge being changed by scanning, according to the second embodiment of the present invention. Fig. 20 is a flowchart illustrating a step of restoring an edge of a tooth based on a first profile curve extended, a second profile curve extended, a third profile curve extended, and a fourth profile curve extended.

The second embodiment is different from the first embodiment in that an edge 11A of a tooth is restored using second data.

The second embodiment includes steps ST21 to ST26 illustrated in Fig. 19 that are similar to steps ST1 to ST6 of the first embodiment, and steps ST31, ST34, and ST35 illustrated in Fig. 20 that are similar to steps ST11, ST13, and ST14 of the first embodiment. Thus, details of these steps will not be described.

The second embodiment describes an example of restoring an edge of scan data on a cavity forming tooth, or a margin of a cavity.

As illustrated in Fig. 19, step ST21 is performed to acquire the scan data on the cavity forming tooth.

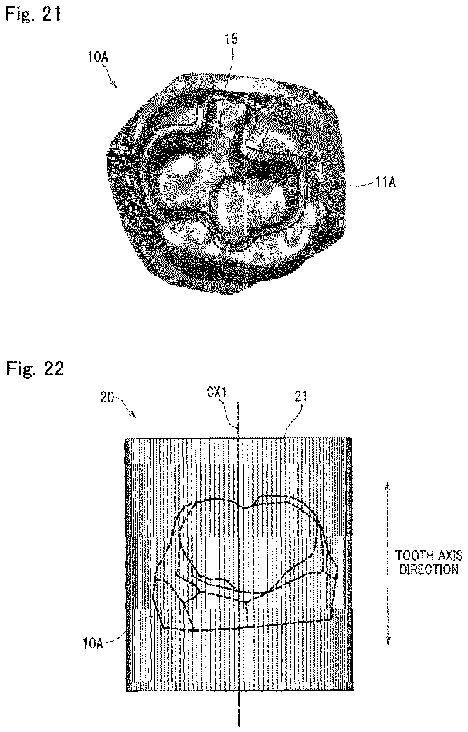

Fig. 21 is a schematic diagram illustrating an example of the scan data on the cavity forming tooth before restoration. Fig. 21 is a plan view of the cavity forming tooth, or a diagram seen from a direction from a crown toward a tooth root. As illustrated in Fig. 21, scan data 10A on the cavity forming tooth before restoration includes a cavity 15 with a margin that is the edge 11A and is rounded.

Returning to Fig. 19, step ST22 is performed to delete the edge 11A of the cavity forming tooth.

Step ST23 is performed to extract a boundary line BL1 surrounding the part deleted in the scan data 10A on the cavity forming tooth.

Step ST24 is performed to dispose first data 20 while superimposing the first data 20 on the scan data 10A.

Fig. 22 is a schematic diagram illustrating a step of disposing the first data while superimposing the first data on the scan data. As illustrated in Fig. 22, the first data 20 is disposed to be superimposed on the scan data 10A such that the center axis CX1 of the first data 20 is along a tooth axis direction of the cavity forming tooth.

Returning to Fig. 19, step ST25 is performed to create a first profile curve DL1 and a second profile curve DL2 indicating an outline of the scan data 10A across a part deleted in each of the sections of the scan data 10A, the sections being taken along corresponding multiple plates 21 of the first data 20.

Step ST25 is performed to extend each of the first profile curve DL1 and the second profile curve DL2 in a direction of compensating for the scan data on the deleted part.

Step ST26 is performed to dispose second data 22, in which multiple plates 23 are arranged, while superimposing the second data 22 on the scan data 10A.

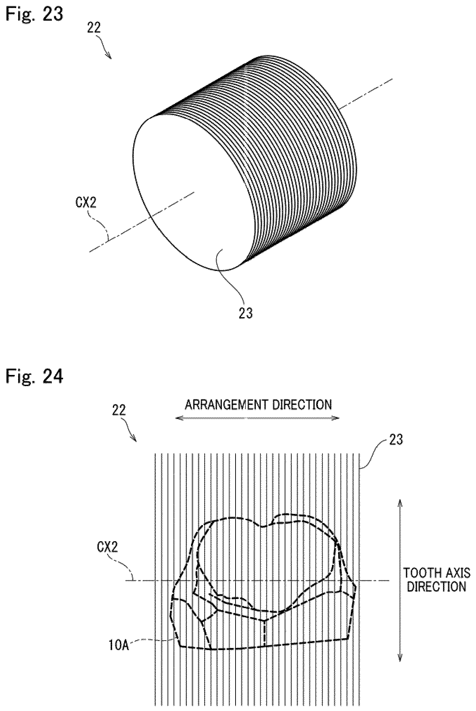

Fig. 23 is a perspective view illustrating an example of second data in which multiple plates are arranged. As illustrated in Fig. 23, the second data 22 includes the multiple plates 23. The multiple plates 23 are arranged in one direction. The multiple plates 23 are arranged parallel to each other. The multiple plates 23 are arranged at equal intervals in the one direction. The one direction is a direction in which a center axis CX2 of the second data 22 extends.

The multiple plates 23 are identical in shape and size. Each of the multiple plates 23 has a disk shape.

The second data 22 is used to cut the scan data 10A by each of the multiple plates 23 to acquire sectional data of the scan data 10A. The third profile curve and the fourth profile curve to be described later are created based on the sectional data that is of the scan data 10A and acquired using the second data 22.

The second data 22 is disposed to pass through the scan data 10A. Thus, the scan data 10A can be cut by the multiple plates 23 of the second data 22, and sectional data of the scan data 10A can be acquired.

Fig. 24 is a schematic diagram illustrating a step of disposing the second data while superimposing the second data on the scan data. As illustrated in Fig. 24, the second data 22 is disposed to be superimposed on the scan data 10A such that the arrangement direction of the multiple plates 23 intersects the tooth axis direction of the cavity forming tooth. The second embodiment includes the second data 22 that is disposed to be superimposed on the scan data 10A such that the arrangement direction of the multiple plates 23 and the tooth axis direction of the cavity forming tooth are orthogonal to each other.

Returning to Fig. 19, step ST28 is performed to create the third profile curve and the fourth profile curve indicating an outline of the scan data 10A across the part deleted in each of the sections of the scan data 10A, the sections being taken along the corresponding multiple plates 23 in the second data 22.

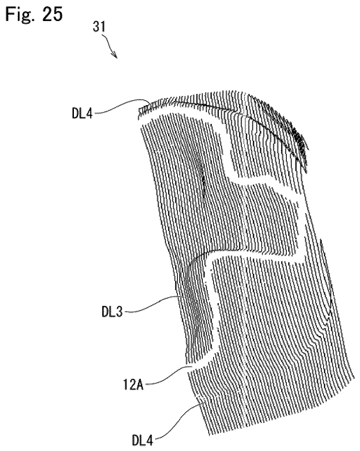

Fig. 25 is a schematic diagram illustrating a step of creating the third profile curve and the fourth profile curve extended. Fig. 25 illustrates one side of profile curve data 31 of the scan data 10A, and does not illustrate another side thereof. As illustrated in Fig. 25, the third profile curve DL3 and the fourth profile curve DL4 indicating the outline of the scan data 10A are created across the part 12 deleted in each of the sections of the scan data 10A, the sections being taken along the corresponding multiple plates 23 of the second data 22. The outline of the scan data 10A means a contour line of the cavity forming tooth.

Fig. 25 illustrates an example in which the third profile curve DL3 is created closer to the crown than the deleted part 12A, and the fourth profile curve DL4 is created closer to the crown than the deleted part 12A.

Returning to Fig. 19, step ST29 is performed to extend each of the third profile curve DL3 and the fourth profile curve DL4 in a direction of compensating for the scan data 10A on the deleted part 12A. The third profile curve DL3 and the fourth profile curve DL4 are extended by the same method as that for extending the first profile curve DL1 and the second profile curve DL2.

Step ST30 is performed to restore the edge 11A of the cavity forming tooth based on the first profile curve DL1 extended, the second profile curve DL2 extended, the third profile curve DL3 extended, and the fourth profile curve DL4 extended. Step ST30 will be described with reference to Fig. 20.

As illustrated in Fig. 20, step ST31 is performed to calculate a first intersection at which the first profile curve DL1 extended and the second profile curve DL2 extended intersect in each of the sections of the scan data 10A, the sections being taken along the corresponding multiple plates 21 in the first data 20.

Step ST32 is performed to calculate a second intersection at which the third profile curve DL3 extended and the fourth profile curve DL4 extended intersect in each of the sections of the scan data 10A, the sections being taken along the corresponding multiple plates 23 of the second data 22.

The third profile curve DL3 and the fourth profile curve DL4, which are extended in step ST29, intersect each other in the deleted part 12A. Step ST32 is performed to calculate the second intersection of the third profile curve DL3 extended and the fourth profile curve DL4 extended in each of the sections.

Step ST33 is performed to create an intersection line CL1 based on the calculated first and second intersections. Specifically, the intersection line CL1 is created by three-dimensionally connecting the first and second intersections calculated in each of the sections. For example, the intersection line CL1 is created by connecting points closest to each other at the first intersection and the second intersection.

Step ST34 is performed to restore the edge 11A of the cavity forming tooth based on the intersection line CL1. Specifically, step ST34 includes step ST35 of creating the edge 11A based on the boundary line BL1 and the intersection line CL1.

Step ST35 is performed to create shape data from the boundary line BL1 to the intersection line CL1. As a result, an edge 14A can be restored to the deleted part 12A.

### [Effects]

The method according to the second embodiment of the present invention enables achieving effects below.

The method according to the second embodiment of the present invention uses the first data 20 and the second data 22 to restore the edge 11A of the scan data 10A on the cavity forming tooth. Specifically, the method according to the second embodiment includes steps ST27 to ST29 in addition to the method according to the first embodiment. Step ST27 is performed to dispose second data 22, in which the multiple plates 23 are arranged, while superimposing the second data 22 on the scan data 10A. Step ST28 is performed to create the third profile curve DL3 and the fourth profile curve DL4 indicating the outline of the scan data 10A across the part 12A deleted in each of the sections of the scan data 10A, the sections being taken along the corresponding multiple plates 23 of the second data 22. Step ST29 is performed to extend each of the third profile curve DL3 and the fourth profile curve DL4 in a direction of compensating for the scan data on the part 12A deleted in each of the sections of the scan data 10A, the sections being taken along the corresponding multiple plates 23 of the second data 22. The method according to the second embodiment includes step ST30 of restoring an edge of a tooth and step ST30 is performed to restore the edge 11A of the cavity forming tooth based on the first profile curve DL1 extended, the second profile curve DL2 extended, the third profile curve DL3 extended, and the fourth profile curve DL4 extended.

This configuration enables the edge of the tooth in the scan data 10A to be further improved in quality. For example, the edge 11A, such as a margin of the cavity 15, in the scan data 10A on the cavity forming tooth can be restored closer to a real object.

As described above, the method according to the second embodiment enables the edge 11A of the tooth having a complicated shape such as the cavity forming tooth to be restored closer to the real object using the first data 20 and the second data 22. As a result, the scan data 10A can be created with higher quality.

Step ST30 includes step ST31 of calculating the first intersection, step ST32 of calculating the second intersection, step ST33 of creating the intersection line, and step ST34 of restoring the edge. Step ST31 is performed to calculate the first intersection at which the first profile curve DL1 extended and the second profile curve DL2 extended intersect in each of the sections of the scan data 10A, the sections being taken along the corresponding multiple plates 21 of the first data 20. Step ST32 is performed to calculate the second intersection at which the third profile curve DL3 extended and the fourth profile curve DL4 extended intersect in each of the sections of the scan data 10A, the sections being taken along the corresponding multiple plates 23 of the second data 22. Step ST33 is performed to create the intersection line CL1 based on the calculated first and second intersections. Step ST34 is performed to restore the edge 11A of the tooth based on the intersection line CL1. This configuration enables the edge 11A of the tooth having a complicated shape to be restored by being brought closer to the real object.

The first data 20 includes the center axis CX1 where the multiple plates 21 intersect. Step ST24 of disposing the first data 20 while superimposing the first data 20 on the scan data 10A includes disposing the first data 20 such that the center axis CX1 is along the tooth axis direction of the tooth. Step ST27 of disposing the second data 22 while superimposing the second data 22 on the scan data 10A includes disposing the second data 22 such that the arrangement direction of the multiple plates 23 intersects the tooth axis direction of the tooth. This configuration enables the intersection line CL1 indicating the edge of the tooth to be created closer to an edge line of the real object. As a result, the edge 11A of the tooth having a complicated shape can be restored by being brought closer to the real object.

Although the second embodiment describes an example in which the second data 22 is disposed to be superimposed on the scan data 10A such that the arrangement direction of the multiple plates 23 intersects the tooth axis direction of the tooth, the present invention is not limited thereto. For example, the second data 22 may be disposed to be superimposed on the scan data 10A such that the arrangement direction of the multiple plates 23 is along the tooth axis direction of the tooth. Alternatively, the second data 22 may be disposed to be superimposed on the scan data 10A based on information input by a user.

Although the second embodiment describes an example in which the second data 22 is disposed to be superimposed on the entire scan data 10A, the present invention is not limited thereto. For example, the second data 22 may be disposed to be partially superimposed on the scan data 10A.

Although the second embodiment describes an example in which each of the multiple plates 23 of the second data 22 has a disk shape, the present invention is not limited thereto. For example, each of the multiple plates 23 may have a rectangular shape, a polygonal shape, or an elliptical shape when viewed from its thickness direction as far as having a plate shape.

Although the second embodiment describes an example in which the multiple plates 23 of the second data 22 are disposed parallel to each other, the present invention is not limited thereto. For example, the multiple plates 23 may be disposed side by side to form a curved shape.

Although the second embodiment describes an example in which the multiple plates 23 of the second data 22 are disposed at equal intervals, the present invention is not limited thereto. For example, the multiple plates 23 may be disposed at different intervals.

### (Third embodiment)

A method according to a third embodiment of the present invention will be described.

The third embodiment will be mainly described about a point different from the second embodiment. The third embodiment includes a configuration that is identical or equivalent to that of the second embodiment and that is described with the same reference numeral as that of the second embodiment. The third embodiment does not have a description duplicated with the second embodiment.

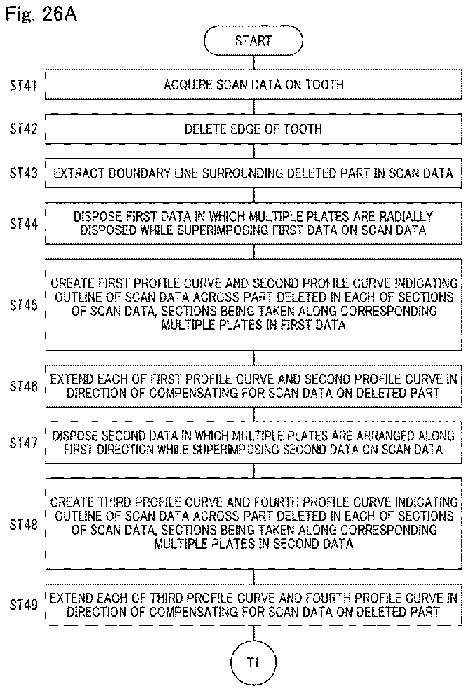

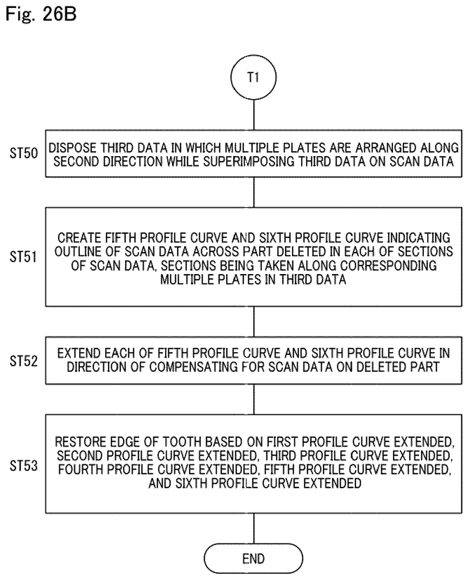

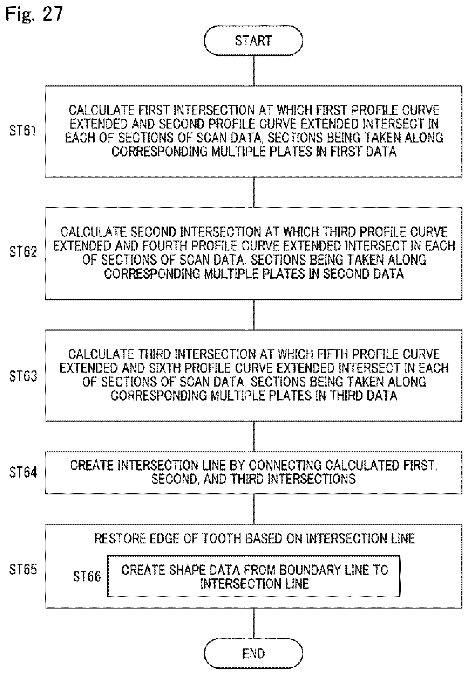

Figs. 26A and 26B are each a flowchart of a method for restoring an edge of a tooth, the edge being changed by scanning, according to the third embodiment of the present invention. Fig. 27 is a flowchart illustrating a step of restoring an edge of a tooth based on a first profile curve extended, a second profile curve extended, a third profile curve extended, a fourth profile curve extended, a fifth profile curve extended, and a sixth profile curve extended.

The third embodiment is different from the second embodiment in that an edge 11A of a tooth is restored using third data.

The third embodiment includes steps ST41 to ST49 illustrated in Fig. 26A that are similar to steps ST21 to ST29 of the second embodiment, and steps ST61, ST62, ST65 and ST66 illustrated in Fig. 27 that are similar to steps ST31, ST32, ST34 and ST35 of the second embodiment. Thus, details of these steps will not be described.

As in the second embodiment, the third embodiment describes an example of restoring an edge of scan data on a cavity forming tooth, or a margin of a cavity.

As illustrated in Fig. 26A, steps ST41 to ST49 are performed. The third embodiment describes a direction in which multiple plates 23 of second data 22 are arranged in step ST47, the direction being referred to as a "first direction".

As illustrated in Fig. 26B, step ST50 is performed to dispose the third data, in which the multiple plates are arranged along a second direction, while superimposing the third data on scan data 10A. The second direction means a direction different from the first direction. For example, the second direction intersects the first direction. The third embodiment includes the second direction that is orthogonal to the first direction. That is, the second direction is along the tooth axis direction of the cavity forming tooth.

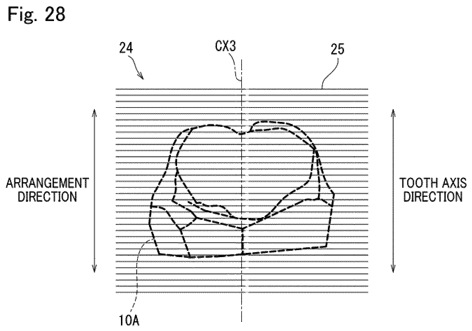

Fig. 28 is a schematic diagram illustrating a step of disposing third data while superimposing the third data on scan data. As illustrated in Fig. 28, step ST50 is performed to dispose the third data 24, in which multiple plates 25 are arranged along the second direction, while superimposing the third data 24 on the scan data 10A, the second direction being different from the first direction in which the multiple plates 23 are arranged in the second data 22.

As with the second data 22, the third data 24 includes the multiple plates 25. The multiple plates 25 are arranged in the second direction. The multiple plates 23 are arranged at equal intervals in the second direction. The second direction is a direction in which a center axis CX3 of the third data extends.

The third data 24 is disposed such that the center axis CX3 of the third data 24 passes through the center of the cavity forming tooth in plan view.

The multiple plates 25 are identical in shape and size. Each of the multiple plates 25 has a disk shape.

The third embodiment includes the multiple plates 25 of the third data 24 that are similar to the multiple plates 23 of the second data 22 except for the arrangement direction.

The third data 24 is used to cut the scan data 10A by each of the multiple plates 25 to acquire sectional data of the scan data 10A. The fifth profile curve and the sixth profile curve to be described later are created based on the sectional data that is of the scan data 10A and acquired using the third data 24.

The third data 24 is disposed to pass through the scan data 10A. Thus, the scan data 10A can be cut by the multiple plates 25 of the third data 24, and sectional data of the scan data 10A can be acquired.

Returning to Fig. 26B, step ST51 is performed to create the fifth profile curve and the sixth profile curve indicating an outline of the scan data 10A across the part deleted in each of the sections of the scan data 10A, the sections being taken along the corresponding multiple plates 25 in the third data 24. Step ST51 is similar to step ST48 of creating the third profile curve and the fourth profile curve, so that details thereof are not described.

Step ST52 is performed to extend each of the fifth profile curve and the sixth profile curve in a direction of compensating for the scan data on the deleted part. Step ST52 is similar to step ST48 of creating the third profile curve and the fourth profile curve, so that details thereof are not described.

Step ST53 is performed to restore the edge of the tooth based on the first profile curve extended, the second profile curve extended, the third profile curve extended, the fourth profile curve extended, the fifth profile curve extended, and the sixth profile curve extended. Step ST52 will be described with reference to Fig. 27.

As illustrated in Fig. 27, step ST61 is performed to calculate a first intersection at which the first profile curve extended and the second profile curve extended intersect in each of the sections of the scan data 10A, the sections being taken along the corresponding multiple plates 21 in the first data 20.

Step ST62 is performed to calculate a second intersection at which the third profile curve extended and the fourth profile curve extended intersect in each of the sections of the scan data 10A, the sections being taken along the corresponding multiple plates 23 of the second data 22.

Step ST63 is performed to calculate a third intersection at which the fifth profile curve extended and the sixth profile curve extended intersect in each of the sections of the scan data 10A, the sections being taken along the corresponding multiple plates 25 of the third data 24. Step ST63 is performed to calculate the third intersection in a similar manner to that in step ST62.

Step ST64 is performed to create an intersection line CL1 based on the calculated first, second, and third intersections. Specifically, the intersection line CL1 is created by three-dimensionally connecting the first, second, and third intersections calculated in each of the sections.

Step ST65 is performed to restore the edge 11A of the cavity forming tooth based on the intersection line CL1. Specifically, step ST65 includes step ST66 of creating the edge 11A based on a boundary line BL1 and the intersection line CL1.

Step ST66 is performed to create shape data from the boundary line BL1 to the intersection line CL1. As a result, an edge can be restored to a part 12A deleted in the scan data 10A.

### [Effects]

The method according to the third embodiment of the present invention enables achieving effects below.

The method according to the third embodiment of the present invention uses the first data 20, the second data 22, and the third data 24 to restore the edge 11A of the scan data 10A on the cavity forming tooth. Specifically, the method according to the third embodiment includes steps ST50 to ST52 in addition to the method according to the second embodiment. Step ST50 is performed to dispose the third data 24, in which multiple plates 25 are arranged along the second direction, while superimposing the third data 24 on the scan data 10A, the second direction being different from the first direction in which the multiple plates 23 are arranged in the second data 22. Step ST51 is performed to create the fifth profile curve and the sixth profile curve indicating the outline of the scan data 10A across the part 12A deleted in each of the sections of the scan data 10A, the sections being taken along the corresponding multiple plates 25 of the third data 24. Step ST52 is performed to extend each of the fifth profile curve and the sixth profile curve in a direction of compensating for the scan data on the part 12A deleted in each of the sections of the scan data 10A, the sections being taken along the corresponding multiple plates 25 of the third data 24. The method according to the third embodiment includes step ST53 of restoring an edge of a tooth and step ST53 is performed to restore the edge 11A of the cavity forming tooth based on the first profile curve extended, the second profile curve extended, the third profile curve extended, the fourth profile curve extended, the fifth profile curve extended, and the sixth profile curve extended.

This configuration enables the edge of the tooth in the scan data 10A to be further improved in quality. For example, the edge 11A, such as a margin of the cavity 15, in the scan data 10A on the cavity forming tooth can be restored closer to a real object.

As described above, the third embodiment enables restoring the edge 11A with higher accuracy by restoring the edge 11A of the scan data 10A on the cavity forming tooth using the first data 20, the second data 22, and the third data 24.

Although the third embodiment describes an example in which the multiple plates 25 of the third data 24 are similar to the multiple plates 23 of the second data 22, the present invention is not limited thereto. For example, the multiple plates 25 of the third data 24 may be different from the multiple plates 23 of the second data 22.

### (Fourth embodiment)

A method according to a fourth embodiment of the present invention will be described.

The fourth embodiment will be mainly described about a point different from the first embodiment. The fourth embodiment includes a configuration that is identical or equivalent to that of the first embodiment and that is described with the same reference numeral as that of the first embodiment. The fourth embodiment does not have a description duplicated with the first embodiment.

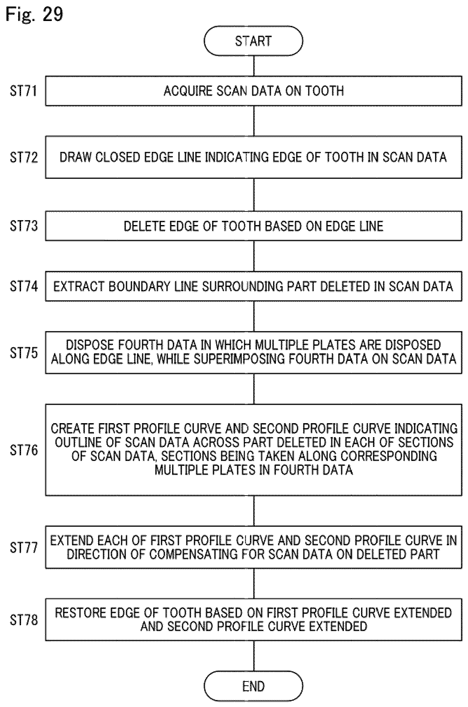

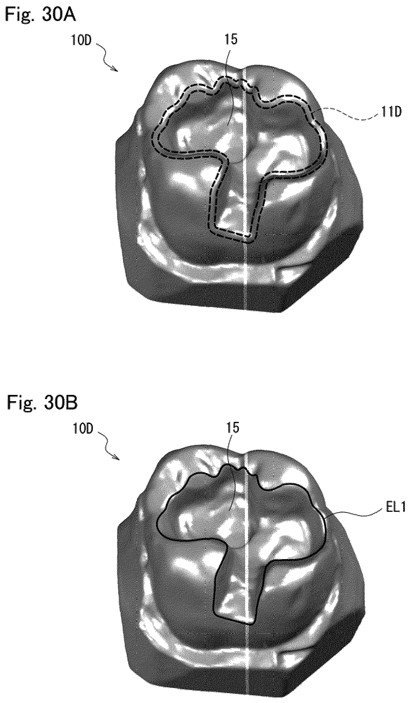

Fig. 29 is a flowchart of a method for restoring an edge of a tooth, the edge being changed by scanning, according to the fourth embodiment of the present invention. Figs. 30A to 30E are each a schematic diagram illustrating a method for restoring an edge of a tooth, the edge being changed by scanning, according to the fourth embodiment of the present invention.

The fourth embodiment is different from the first embodiment in that an edge 11D of a tooth is restored using fourth data 26.

The fourth embodiment includes steps ST71, ST74, and ST76 to ST78 illustrated in Fig. 29 that are similar to steps ST1, ST3, and ST5 to ST7 of the first embodiment. Thus, details of these steps will not be described.

The fourth embodiment describes an example of restoring an edge of scan data on a cavity forming tooth, or a margin of a cavity.

As illustrated in Fig. 29, step ST71 is performed to acquire scan data 10D on the cavity forming tooth.

Fig. 30A is a schematic diagram illustrating an example of scan data on a cavity forming tooth before restoration. As illustrated in Fig. 30A, the scan data 10D on the cavity forming tooth before restoration includes a cavity 15 with a margin that is the edge 11D and is rounded.

Returning to Fig. 29, step ST72 is performed to draw a closed edge line indicating the edge of the tooth in the scan data 10D.

Fig. 30B is a schematic diagram illustrating a step of drawing an edge line of a tooth. As illustrated in Fig. 30B, an edge line EL1 indicating an edge of a tooth is drawn in the scan data 10D of the cavity forming tooth. The edge line EL1 is a closed line in which a start point and an end point are connected. For example, the edge line EL1 is a curve along the edge of the tooth.

The edge line EL1 is drawn along the edge of the tooth in the scan data 10D. For example, the edge line EL1 may be drawn based on information input by a user using an input interface. Alternatively, the edge line EL1 may be automatically drawn by detecting edges using an algorithm for detecting an edge and connecting the detected edges.

Returning to Fig. 29, step ST73 is performed to delete the edge 11D of the tooth based on the edge line EL1 in the scan data 10D.

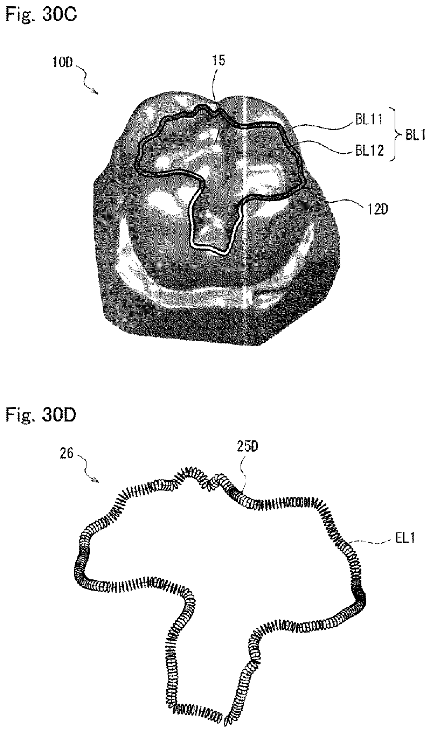

Fig. 30C is a schematic diagram illustrating a step of deleting an edge of a tooth. Fig. 30C illustrates a part 12 in which the edge 11D of the tooth is deleted in the scan data 10D. Scan data on the edge 11D of the tooth is deleted based on the edge line EL1. For example, scan data in a predetermined range centered on the edge line EL1 is deleted in the scan data 10D. That is, scan data within a range of a predetermined distance from the edge line EL1 in a normal direction of the edge line EL1 is deleted. Specifically, the scan data in a tubular region centered on the edge line EL1 is deleted.

Returning to Fig. 29, step ST74 is performed to extract a boundary line BL1 surrounding a part 12D deleted in the scan data 10D on the cavity forming tooth.

Step ST75 is performed to dispose the fourth data 26, in which multiple plates 25D are disposed at intervals along the edge line EL1, while superimposing the fourth data 26 on the scan data 10D.

Fig. 30D is a schematic diagram illustrating an example of the fourth data in which multiple plates are arranged. As illustrated in Fig. 30D, the fourth data 26 includes the multiple plates 25D arranged along the edge line EL1. The multiple plates 25D are each disposed to align with the normal direction of the edge line EL1. In other words, each of the multiple plates 25D is disposed orthogonally to the edge line EL1.

For example, the multiple plates 25D each have a disk shape and are disposed at equal intervals. Each of the plates 25D has an outer diameter larger than a diameter of the part 12D deleted in step ST73. For example, the number of the multiple plates 25D is 30 or more and 3500 or less. The number of the multiple plates 25D is preferably 200 or more and 500 or less. As a result, the edge 11D of the tooth can be restored closer to the real object. The multiple plates 25D are disposed at an interval of 10 µm or more and 400 µm or less. The multiple plates 25D are preferably disposed at an interval of 40 µm or more and 100 µm or less.

The number of the multiple plates 25D may be automatically set in accordance with a length of the edge line EL1. For example, the multiple plates 25D may be disposed at intervals by calculating the start point and the end point of the edge line EL1 to preset the intervals between the start point and the end point. In this case, the number of the multiple plates 25D is automatically set based on the length of the edge line EL1 and the intervals of the multiple plates 25D.

That is, step ST75 may include acquiring a length of the edge line EL1 and intervals of the multiple plates 25D, and determining the number of the multiple plates 25D based on the length of the edge line EL1 and the intervals of the multiple plates 25D.

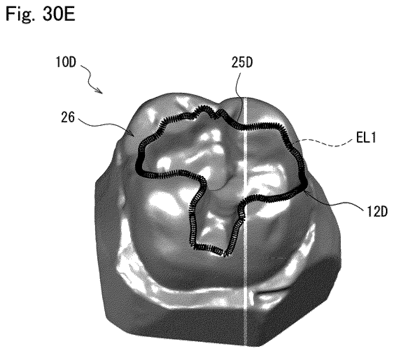

Fig. 30E is a schematic diagram illustrating a step of disposing the fourth data while superimposing the fourth data on scan data. As illustrated in Fig. 30E, the fourth data 26 including the multiple plates 25D is arranged in the part 12D deleted in the scan data 10D. The multiple plates 25D each have an outer diameter larger than the part 12D deleted, so that the multiple plates 25D are superimposed on a remaining part in the scan data 10D. As a result, a section of the scan data 10D can be acquired in a part where the multiple plates 25D are superimposed.

Returning to Fig. 29, step ST76 is performed to create a first profile curve DL1 and a second profile curve DL2 indicating an outline of the scan data 10D across the part deleted in each of the sections of the scan data 10D, the sections being taken along corresponding multiple plates 25D of the fourth data 26.

Step ST77 is performed to extend each of the first profile curve DL1 and the second profile curve DL2 in a direction of compensating for the scan data on the part 12D deleted.

Step ST78 is performed to restore the edge of the tooth based on the first profile curve DL1 extended and the second profile curve DL2 extended.

Steps ST76 to ST78 are similar to steps ST5 to ST7 of the first embodiment, and processing performed in steps ST76 to ST78 is similar to that in the description of Figs. 13A to 13I of the first embodiment.

### [Effects]

The method according to the fourth embodiment of the present invention enables achieving effects below.

The method according to the fourth embodiment of the present invention uses the fourth data 26 to restore the edge 11D of the scan data 10D on the tooth. Specifically, the method according to the fourth embodiment includes steps ST71 to ST78. Step ST71 is performed to acquire scan data 10D on the tooth. Step ST72 is performed to draw the closed edge line EL1 indicating the edge of the tooth in the scan data 10D. Step ST73 is performed to delete scan data on the edge 11D of the tooth based on the edge line EL1 in the scan data 10D. Step ST74 is performed to dispose the fourth data 26, in which multiple plates 25D are disposed at intervals along the edge line EL1, while superimposing the fourth data 26 on the scan data 10D. Step ST75 is performed to create the first profile curve DL1 and the second profile curve DL2 indicating the outline of the scan data 10D across the part 12D deleted in each of the sections of the scan data 10D, the sections being taken along the corresponding multiple plates 25D of the fourth data 26. Step ST76 is performed to extend each of the first profile curve DL1 and the second profile curve DL2 in a direction of compensating for the scan data on the part 12D deleted in each of the sections of the scan data, the sections being taken along the corresponding multiple plates 25D of the fourth data 26. Step ST77 is performed to restore the edge of the tooth based on the first profile curve DL1 and the second profile curve DL2 that are extended in each of the sections of the scan data, the sections being taken along the corresponding multiple plates 25D of the fourth data 26.

This configuration enables further improvement in quality of the scan data on a tooth. The method according to the fourth embodiment enables restoring an edge of scan data on a tooth having a complicated shape with a large height difference, such as a cavity forming tooth, to an edge shape close to a real object. For example, scan data on an edge of a tooth rounded by scanning can be restored to a sharp edge shape close to a real object.

The method according to the fourth embodiment enables reducing processing as compared with the first embodiment because the closed edge line EL1 indicating the edge of the tooth is drawn and the multiple plates 25D are disposed along the edge line EL1. As a result, the method according to the fourth embodiment enables restoring the scan data on the edge in a short time as compared with the method according to the first embodiment. To restore scan data on an edge of especially a tooth having a complicated shape such as a cavity forming tooth with higher accuracy, a method as in the second embodiment is used in which the first data and the second data, each including multiple plates radially disposed, are disposed in different directions. The fourth embodiment enables restoring an edge in the same manner for all cases because the multiple plates are disposed on the edge line EL1.

Step ST74 of disposing the fourth data 26 while superimposing the fourth data 26 on the scan data 10D includes disposing each of the multiple plates 25D to align with the normal direction of the edge line EL1. This configuration enables even the edge of the tooth having a complicated shape to be restored to a shape closer to a real object.

Each of the multiple plates 25D in the fourth data 26 has a disk shape. The multiple plates 25D each may have the center located on the edge line EL1. This configuration enables further improvement in quality of the scan data on a tooth.

The multiple plates 25D in the fourth data 26 are disposed at equal intervals. This configuration facilitates restoration of an edge and enables further improvement in quality of the scan data on a tooth.

The number of the multiple plates 25D in the fourth data 26 is 30 or more and 3500 or less. This configuration enables the scan data on the tooth to be efficiently improved in quality. For example, the amount of processing increases as the number of the multiple plates 25D increases, so that it takes time to restore the edge. Setting the number of the multiple plates 25D in the fourth data 26 to 30 or more and 3500 or less enables not only preventing the processing from excessively increasing, but also restoring the edge of the tooth in the scan data 10D to a shape closer to the real object.

Step ST75 of disposing the fourth data 26 to be superimposed on the scan data 10D includes acquiring a length of the edge line EL1 and intervals of the multiple plates 25D, and determining the number of the multiple plates 25D based on the length of the edge line EL1 and the intervals of the multiple plates 25D. This configuration enables the number of the multiple plates 25D to be automatically determined, so that the scan data on the tooth can be efficiently improved in quality.

Although the fourth embodiment describes an example of the method, the present invention is not limited thereto. The present invention may be implemented by a program for executing the method according to the fourth embodiment or a computer-readable recording medium in which the program for executing the method is recorded.

The method according to the fourth embodiment may be performed by an apparatus. For example, the apparatus according to the fourth embodiment restores a shape of an edge of a tooth changed by scanning, and may include one or more processors, and a memory storing an instruction executable by the one or more processors. The instruction may include the steps of the method described above.

Although the fourth embodiment describes an example in which each of the multiple plates 25D of the fourth data 26 has a disk shape, the present invention is not limited thereto. Each of the multiple plates 25D may be formed in a rectangular shape, a polygonal shape, or an elliptical shape as far as it is formed in a plate shape.

Although the fourth embodiment describes an example in which the multiple plates 25D of the fourth data 26 are disposed at equal intervals along the edge line EL1, the present invention is not limited thereto. The multiple plates 25D may not be disposed at equal intervals. For example, the intervals of the multiple plates 25D may be narrowed in a part with a relatively complicated shape and widened in a part with a relatively simple shape, the parts being on the edge line EL1. For example, a part with a curvature larger than a predetermined curvature on the edge line EL1 may have narrower intervals of the multiple plates 25D than a part with a curvature equal to or less than the predetermined curvature on the edge line EL1.

The fourth embodiment includes the multiple plates 25D in the fourth data 26 in which the plate disposed first and the plate disposed last may be displaced in position from each other. In this case, the method according to the fourth embodiment may be performed to automatically detect a position of the plate disposed last, and delete the plate disposed last when it is determined that the position is away from the plate disposed first by a predetermined distance or more.

### <Example>

An example will be described.

There is an example 1 in which an edge in scan data on a tooth was restored using the method according to the fourth embodiment, and a dental prosthetic device was fabricated based on the restored scan data on the tooth. There is also a comparative example 1 in which a dental prosthetic device was fabricated based on unprocessed scan data on a tooth in which an edge was not restored. The dental prosthetic device is a zirconia coping. The example 1 and the comparative example 1 each include the scan data on the tooth that was acquired by scanning an abutment tooth model with a scanner.

The dental prosthetic device fabricated in each of the example 1 and the comparative example 1 was attached to the abutment tooth model, and lifting of the dental prosthetic device from the abutment tooth model was evaluated.

Table 1 below shows fabrication conditions of the dental prosthetic device of each of the example 1 and the comparative example 1.

**[Table 1]**

| | Comparative example 1 | Example 1 |
|---|---|---|
| Scanner | D2000 | D2000 |
| | 3shape Inc. | 3shape Inc. |
| Restoration processing | - | Corner and margin are processed |
| CAD | Dental designer 2021 3shape Inc. Preset value | Dental designer 2021 3shape Inc. Preset value |
| CAM | Go2dental ver. 6.04 GO2cam International Fine mode | Go2dental ver. 6.04 GO2cam International Fine mode |
| Finishing machine | DWX-52DCi Roland DG Corp. | DWX-52DCi Roland DG Corp. |
| Milling bar | BE-DLC Shofu Inc. | BE-DLC Shofu Inc. |
| Material | Lucent supra Shofu Inc. | Lucent supra Shofu Inc. |
| Sintering furnace | Austromat 664i DEKEMA Dental-Keramiköfen GmbH Preset value | Austromat 664i DEKEMA Dental-Keramiköfen GmbH Preset value |

The dental prosthetic device (coping) of the example 1 was fabricated by procedures below. The dental prosthetic device (coping) of the comparative example 1 was fabricated without performing a procedure (2) below.

### (1) Scanning of abutment tooth model

An abutment tooth model made of hard plaster was used, and the abutment tooth model was 3D scanned with a technical desktop scanner (D2000, 3shape Inc.).

### (2) Estimation and restoration processing of edge

A margin and a corner angle of the abutment tooth of the acquired scan data were restored by the method according to the fourth embodiment using general-purpose 3D CAD software (Rhinoceros 3D, Robert McNeel & Associates).

### (3) Design of coping

Unprocessed scan data and data processed by the method according to the fourth embodiment were read into dental CAD software (Dental Designer 2021, 3shape Inc.), and the coping was designed. Conditions of the design include a minimum thickness of 0.5 mm, a cement gap of 0.005 mm, and an additional cement gap of 0.025 mm, and other parameters being preset values.

### (4) Creation of processing data

Data on copings under two conditions was read into CAM software (GO2 dental ver 6.04, GO2cam International), and processing data was created. The processing condition was fine mode.

### (5) Processing with dental milling machine

A milling bar (Shofu CAD/CAM milling bar BE-2.0-4DLC (2.0 mm), BE-1.0-4-DLC, BE-0.6-4-DLC (0.6 mm), Shofu Inc.) and a ceramic for dental cutting processing (Shofu disc ZR Lucent Supra, Shofu Inc.) were set in a dental milling machine (DWX-52DCi, Roland DG Corp.), and processing data for each condition was input to perform zirconia coping processing.

### (6) Sintering of semi-sintered body

A semi-sintered body of each copping obtained was sintered in a zirconia sintering furnace (austromat 664i, DEKEMA Dental-Keramiköfen GmbH). A sintering schedule was a preset value recommended by the manufacturer. After the sintering, an inner surface of each zirconia copping was subjected to sandblasting with a sandblaster (Hibler Oval Jet, Shofu Inc.) and high alumina (Shofu high alumina, Shofu Inc.). Sandblasting processing was performed under a pressure of 0.3 MPa.

### (7) Evaluation of conformity accuracy of zirconia coping

Corner parts in the zirconia copings under the two conditions were removed. Then, each of the zirconia copings was fit to the abutment tooth model, and each of the corner parts removed was photographed by the digital microscope (VHX-5000, KEYENCE CORP.) at a magnification of 25 times. Subsequently, a gap value between margins and a gap value (amount of lifting) of each of canopy parts were measured using a function of measuring a distance between two points.

The copings being the dental prosthetic devices fabricated in the example 1 and the comparative example 1 were each provided with a hole opened in the corner part, and the copings provided with the respective holes were attached to the abutment tooth model, and a margin and lifting of each of the copings were observed.

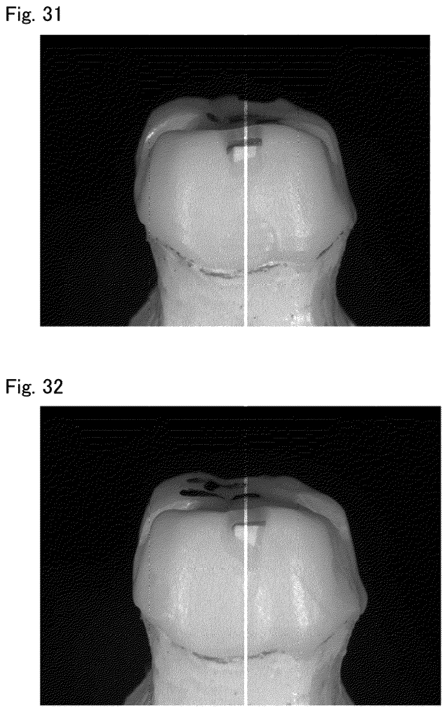

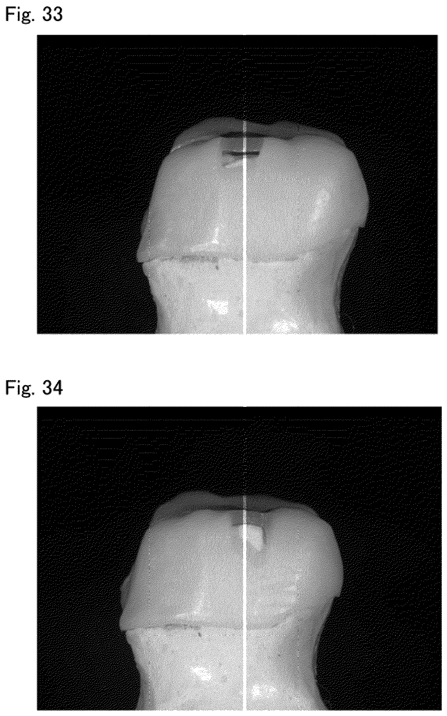

Fig. 31 is a photograph of the abutment tooth model to which the coping fabricated in the comparative example 1 is attached, the photograph being taken from a buccal side. Fig. 32 is a photograph of the abutment tooth model to which the coping fabricated in the example 1 is attached, the photograph being taken from a buccal side. Fig. 33 is a photograph of the abutment tooth model to which the coping fabricated in the comparative example 1 is attached, the photograph being taken from a lingual side. Fig. 34 is a photograph of the abutment tooth model to which the coping fabricated in the example 1 is attached, the photograph being taken from a lingual side.

As illustrated in Figs. 31 to 34, the example 1 has a smaller leveling of the margin and the coping than the comparative example 1.

Measurement results of gap values of the example 1 and the comparative example 1 are shown in Table 2 below.

**[Table 2]**

| | Comparative example 1 | Example 1 |
|---|---|---|
| Gap value in occlusal surface (µm) | 62 | 12 |
| Gap value in margin (µm) | 194 | 59 |

As shown in Table 2, the example 1 has a smaller amount of lifting than the comparative example 1.

The coping in the comparative example 1 is fabricated using unprocessed scan data in which an edge of a tooth is rounded more than an edge of a real abutment tooth model. For this reason, when the coping fabricated in the comparative example 1 is attached to the abutment tooth model, the edge does not fit, and thus lifting is likely to occur. In contrast, the coping in the example 1 is fabricated using scan data obtained by restoring the edge of the tooth to be close to the edge of the real abutment tooth model. For this reason, when the coping fabricated in the example 1 is attached to the abutment tooth model, the edge fits more easily than that in the comparative example 1, and thus the lifting decreases.

The method according to each of the first to fourth embodiments described above may allow the steps to be changed, added, reduced, divided, and integrated depending on environment to be applied.

The method according to each of the first to fourth embodiments described above may allow the steps to be performed by changing the order of the steps.

The present specification describes the terms "first", "second", and the like that are only used for description, and it should not be understood that the terms clarify or imply a rank of relative importance or a technical feature. A feature limited as "first" or "second" implies that one or more such features are included.

As described above, the embodiments are described as examples of the technique disclosed in the present application. However, the technique in the present disclosure is not limited to this, and can also be applied to an embodiment in which modification, replacement, addition, elimination, or the like is appropriately performed.

While the present disclosure is fully described in association with the preferred embodiments with reference to the accompanying drawings, various variations and modifications are obvious to those skilled in the art. Such variations and modifications should be understood to be included in the scope of the present disclosure according to the appended scope of claims unless without departing from the scope thereof.

### (Outline of Embodiment)

### <First Aspect>

A method according to a first aspect of the present invention is a method for restoring a form of an edge of a tooth, the edge being changed by scanning, using a computer. The method includes: acquiring scan data on a tooth; drawing an edge line closed and indicating the edge of the tooth in the scan data; deleting scan data on the edge of the tooth based on the edge line in the scan data; disposing data in which multiple plates are disposed at intervals along the edge line while superimposing the data on the scan data; creating a first profile curve and a second profile curve indicating an outline of the scan data across a part deleted in each of sections of the scan data, the sections being taken along the corresponding multiple plates in the data; extending the first profile curve and the second profile curve in a direction of compensating for the scan data on the part deleted in each of the sections of the scan data, the sections being taken along the corresponding multiple plates in the data; and restoring the edge of the tooth based on the first profile curve and the second profile curve that are extended in each of the sections of the scan data, the sections being taken along the corresponding multiple plates in the data.

### <Second Aspect>

In a method according to a second aspect of the present invention according to the first aspect, the restoring the edge of the tooth may include calculating an intersection at which the first profile curve extended and the second profile curve extended intersect in each of the sections of the scan data, the sections being taken along the multiple plates of the data, connecting the calculated intersections to create an intersection line, and restoring the edge of the tooth based on the intersection line.

### <Third Aspect>

A method according to a third aspect of the present invention according to the second aspect may further include extracting a boundary line surrounding the part deleted in the scan data in the second aspect, and the restoring the edge of the tooth based on the intersection line may include creating shape data from the boundary line to the intersection line.

### <Fourth Aspect>

In a method according to a fourth aspect of the present invention according to the second or third aspect, the extending the first profile curve and the second profile curve may include extending the first profile curve while maintaining a curvature or a rate of change in curvature of the first profile curve at a terminal end of the first profile curve in each of the sections of the scan data, the sections being taken along the corresponding multiple plates of the data, and extending the second profile curve while maintaining a curvature or a rate of change in curvature of the second profile curve at a terminal end of the second profile curve in each of the sections of the scan data, the sections being taken along the corresponding multiple plates of the data.

### <Fifth Aspect>

In a method according to a fifth aspect of the present invention according to any one of the first to fourth aspects, the disposing the data while superimposing the data on the scan data may include disposing each of the multiple plates to align with a normal direction of the edge.

### <Sixth Aspect>

In a method according to a sixth aspect of the present invention according to any one of the first to fifth aspects, the multiple plates each may have a disk shape with a center located on the edge line.

### <Seventh Aspect>

In a method according to a seventh aspect of the present invention according to any one of the first to sixth aspects, the multiple plates may be disposed at equal intervals.

### <Eighth Aspect>

In a method according to an eighth aspect of the present invention according to the seventh aspect, the disposing the data while superimposing the data on the scan data may include acquiring a length of the edge line and intervals of the multiple plates, and determining the number of multiple plates based on the length of the edge line and the intervals of the multiple plates.

### <Ninth Aspect>

In a method according to a ninth aspect of the present invention according to any one of the first to eighth aspects i, the number of multiple plates in the data may be 30 or more and 3500 or less.

### <Tenth aspect>

In a method according to a tenth aspect of the invention according to any of the first to ninth aspects , the edge of the tooth may include an edge of at least one of an abutment tooth, a cavity, a maintenance groove, and a dentition.

### <Eleventh aspect >

A program according to an eleventh aspect of the present invention causes a computer to execute the method in any one of the first to tenth aspects.

### <Twelfth aspect>

A computer-readable recording medium according to a twelfth aspect of the present invention records a program for causing a computer to execute the method in any one of the first to tenth aspects.

### <Thirteenth aspect>

An apparatus according to a thirteenth aspect of the present invention restores a form of an edge of a tooth, the edge being changed by scanning. The apparatus includes one or more processors, and a memory storing instructions executable by the one or more processors. The instructions include: acquiring scan data on a tooth; drawing an edge line closed and indicating the edge of the tooth in the scan data; deleting scan data on the edge of the tooth based on the edge line in the scan data; disposing data in which multiple plates are disposed at intervals along the edge line while superimposing the data on the scan data; creating a first profile curve and a second profile curve indicating an outline of the scan data across a part deleted in each of sections of the scan data, the sections being taken along the corresponding multiple plates in the data; extending the first profile curve and the second profile curve in a direction of compensating for the scan data on the part deleted in each of the sections of the scan data, the sections being taken along the corresponding multiple plates in the data; and restoring the edge of the tooth based on the first profile curve and the second profile curve that are extended in each of the sections of the scan data, the sections being taken along the corresponding multiple plates in the data.

The method for restoring an edge of a tooth, the edge being changed by scanning, according to the present invention can restore an edge of a tooth, the edge being damaged by scanning. Thus, the method is useful for an apparatus, a method, or the like for manufacturing a prosthetic device.

## Claims

1. A method for restoring a form of an edge (101) of a tooth (100), the edge (101) being changed by scanning, using a computer, the method comprising:
acquiring scan data (10) on a tooth (100);
drawing a closed edge line (EL1) indicating the edge (11) of the tooth in the scan data (10);
deleting scan data on the edge (11) of the tooth based on the edge line (EL1) in the scan data (10);
disposing plate-shaped data (26) reflecting multiple plates (21) disposed at intervals along the edge line (EL1) so that the plate-shaped data (26) are superimposed on the scan data (10);
extracting an outline of the tooth in each of the sections taken along the corresponding multiple plates (21) of the scan data (10), the outline being a contour line of the part (13) remaining in each of the sections;
creating a first profile curve (DL1) and a second profile curve (DL2) on the basis of a corresponding outline of the scan data (10) such that no profile curve is created in the part (12) deleted in each of sections of the scan data (10D), the sections being taken along the corresponding multiple plates (21) in the plate-shaped data (20);
extending the first profile curve (DL1) and the second profile curve (DL2) in a direction toward the part (12) deleted in each of the sections of the scan data, the sections being taken along the corresponding multiple plates (21) in the plate-shaped data (20); and
restoring the edge (11) of the tooth (100) based on the first profile curve (DL1) and the second profile curve (DL2) that are extended in each of the sections of the scan data, the sections being taken along the corresponding multiple plates (21) in the plate-shaped data (20).

2. The method according to claim 1, wherein
the restoring the edge (11) of the tooth includes
calculating an intersection at which the first profile curve (DL1) extended and the second profile curve (DL2) extended intersect in each of the sections of the scan data, the sections being taken along the multiple plates (21) of the plate-shaped data (20),
connecting the calculated intersections to create an intersection line (CL1), and
restoring the edge (11) of the tooth based on the intersection line (CL1).

3. The method according to claim 2, further comprising extracting a boundary line (BL1) surrounding the part (12) deleted in the scan data,
wherein the restoring the edge (11) of the tooth based on the intersection line (CL1) includes creating shape data from the boundary line (BL1) to the intersection line (CL1).

4. The method according to claim 2 or 3, wherein
the extending the first profile curve (DL1) and the second profile curve (DL2) includes
extending the first profile curve (DL1) while maintaining a curvature or a rate of change in curvature of the first profile curve (DL1) at a terminal end of the first profile curve (BL1) in each of the sections of the scan data, the sections being taken along the corresponding multiple plates (21) of the plate-shaped data (20), and
extending the second profile curve (DL2) while maintaining a curvature or a rate of change in curvature of the second profile curve (DL2) at a terminal end of the second profile curve (DL2) in each of the sections of the scan data, the sections being taken along the corresponding multiple plates (21) of the plate-shaped data (20).

5. The method according to any one of claims 1 to 4, wherein
the disposing the plate-shaped data (20) so that the plate-shaped data (20) are superimposed on the scan data (10) includes disposing each of the multiple plates (21) to align with a normal direction of the edge (11).

6. The method according to any one of claims 1 to 5, wherein
the multiple plates (21) in the plate-shaped data (20) each have a disk shape with a center located on the edge line (EL1).

7. The method according to any one of claims 1 to 6, wherein
the multiple plates (21) in the plate-shaped data (20) are disposed at equal intervals.

8. The method according to claim 7, wherein
the disposing the plate-shaped data (20) so that the plate-shaped data (20) is superimposed on the scan data (10) includes
acquiring a length of the edge line (EL1) and intervals of the multiple plates (21), and
determining the number of multiple plates (21) based on the length of the edge line (EL1) and the intervals of the multiple plates (21).

9. The method according to any one of claims 1 to 8, wherein
the number of multiple plates (21) in the data is 30 or more and 3500 or less.

10. The method according to any one of claims 1 to 9, wherein
the edge (11) of the tooth includes an edge of at least one of an abutment tooth, a cavity, a maintenance groove, and a dentition.

11. A computer-readable recording medium configured to record a program for causing a computer to execute the method according to any one of claims 1 to 10.

12. An apparatus configured to restore a form of an edge (11) of a tooth (100), the edge (11) being changed by scanning, the apparatus comprising:
one or more processors; and
a memory storing instructions executable by the one or more processors,
the instructions including:
acquiring scan data (10) on a tooth (100);
drawing a closed edge line (EL1) indicating the edge (11) of the tooth in the scan data (10);
deleting scan data on the edge (11) of the tooth based on the edge line (EL1) in the scan data (10);
disposing plate-shaped data (20) reflecting multiple plates (25) disposed at intervals along the edge line (EL1) so that the plate-shaped data (20) are superimposed on the scan data (10);
extracting an outline of the tooth in each of the sections taken along the corresponding one of the multiple plates (21) of the scan data (10), the outline being a contour line of the part (13) remaining in each of the sections;
creating a first profile curve (DL1) and a second profile curve (DL2) on the basis of a corresponding outline of the scan data (10) such that no profile curve is created in the part (12) deleted in each of sections of the scan data (10), the sections being taken along the corresponding multiple plates (21) in the plate-shaped data (20);
extending the first profile curve (DL1) and the second profile curve (DL2) in a direction of the scan data reflecting the part (12) deleted in each of the sections of the scan data, the sections being taken along the corresponding multiple plates (21) in the plate-shaped data (20); and
restoring the edge (11) of the tooth (100) based on the first profile curve (DL1) and the second profile curve (DL2) that are extended in each of the sections of the scan data, the sections being taken along the corresponding multiple plates (21) in the plate-shaped data (20).

13. The apparatus according to claim 12, wherein
the restoring the edge (11) of the tooth includes
calculating an intersection at which the first profile curve (DL1) extended and the second profile curve (DL2) extended intersect in each of the sections of the scan data, the sections being taken along the multiple plates (21) of the plate-shaped data (20),
connecting the calculated intersections to create an intersection line (CL1), and
restoring the edge (11) of the tooth based on the intersection line (CL1).

14. The apparatus according to claim 13, wherein
the instructions further comprising extracting a boundary line (BL1) surrounding the part (12) deleted in the scan data,
wherein the restoring the edge (11) of the tooth based on the intersection line (CL1) includes creating shape data from the boundary line (BL1) to the intersection line (CL1).

15. The apparatus according to claim 13 or 14, wherein
the extending the first profile curve (DL1) and the second profile curve (DL2) includes
extending the first profile curve (DL1) while maintaining a curvature or a rate of change in curvature of the first profile curve (DL1) at a terminal end of the first profile curve (DL1) in each of the sections of the scan data, the sections being taken along the corresponding multiple plates (21) of the plate-shaped data (20), and
extending the second profile curve (DL2) while maintaining a curvature or a rate of change in curvature of the second profile curve (DL2) at a terminal end of the second profile curve (DL2) in each of the sections of the scan data, the sections being taken along the corresponding multiple plates (21) of the plate-shaped data (20).

## Patentansprüche

1. Verfahren zum Wiederherstellen der Form einer durch Scannen veränderten Zahnkante unter Verwendung eines Computers, wobei das Verfahren umfasst:
Erfassen von Scandaten (10) eines Zahns (100);
Zeichnen einer geschlossenen Kantenlinie (EL1), die die Zahnkante (11) in den Scandaten (10) angibt;
Löschen von Scandaten an der Zahnkante (11) auf der Grundlage der Kantenlinie (EL1) in den Scandaten (10);
Anordnen plattenförmiger Daten (26), die eine Vielzahl von Platten (21) widerspiegeln, welche in Abständen entlang der Kantenlinie (EL1) angeordnet sind, sodass die plattenförmigen Daten (26) mit den Scandaten (10) überlagert sind;
Extrahieren eines Umrisses des Zahns in jedem der Schnitte, die entlang der entsprechenden Vielzahl von Platten (21) der Scandaten (10) genommen werden, wobei der Umriss eine Konturlinie des in jedem der Schnitte verbleibenden Teils (13) ist;
Erzeugen einer ersten Profilkurve (DL1) und einer zweiten Profilkurve (DL2) auf der Grundlage eines entsprechenden Umrisses der Scandaten (10) so dass keine Profilkurve in dem Teil (12) erzeugt, welcher in jedem der Schnitte der Scandaten (10D) gelöscht wird, wobei die Schnitte entlang der entsprechenden Vielzahl von Platten (21) in den plattenförmigen Daten (20) genommen werden;
Verlängern der ersten Profilkurve (DL1) und der zweiten Profilkurve (DL2) in eine Richtung auf den in jedem der Schnitte der Scandaten gelöschten Teil (12) zu, wobei die Schnitte entlang der entsprechenden Vielzahl von Platten (21) in den plattenförmigen Daten (20) genommen werden; und
Wiederherstellen der Zahnkante (11) auf der Grundlage der ersten Profilkurve (DL1) und der zweiten Profilkurve (DL2), die in jedem der Schnitte der Scandaten verlängert sind, wobei die Schnitte entlang der entsprechenden Vielzahl von Platten (21) in den plattenförmigen Daten (20) genommen werden.

2. Verfahren nach Anspruch 1, wobei
das Wiederherstellen der Zahnkante (11) umfasst:
Berechnen eines Schnittpunkts, an dem die verlängerte erste Profilkurve (DL1) und die verlängerte zweite Profilkurve (DL2) in jedem der Schnitte der Scandaten einander schneiden, wobei die Schnitte entlang der Vielzahl von Platten (21) der plattenförmigen Daten (20) genommen werden,
Verbinden der berechneten Schnittpunkte zur Erzeugung einer Schnittlinie (CL1),
und
Wiederherstellen der Zahnkante (11) auf der Grundlage der Schnittlinie (CL1).

3. Verfahren nach Anspruch 2, ferner umfassend das Extrahieren einer Begrenzungslinie (BL1), die den in den Scandaten gelöschten Teil (12) umgibt,
wobei das Wiederherstellen der Zahnkante (11) auf der Grundlage der Schnittlinie (CL1) das Erzeugen von Formdaten von der Begrenzungslinie (BL1) bis zur Schnittlinie (CL1) umfasst.

4. Verfahren nach Anspruch 2 oder 3, wobei
das Verlängern der ersten Profilkurve (DL1) und der zweiten Profilkurve (DL2) umfasst:
Verlängern der ersten Profilkurve (DL1) unter Beibehaltung einer Krümmung oder einer Änderungsrate der Krümmung der ersten Profilkurve (DL1) an einem Endabschnitt der ersten Profilkurve (DL1) in jedem der Schnitte der Scandaten, wobei die Schnitte entlang der entsprechenden Vielzahl von Platten (21) der plattenförmigen Daten (20) genommen werden, und
Verlängern der zweiten Profilkurve (DL2) unter Beibehaltung einer Krümmung oder einer Änderungsrate der Krümmung der zweiten Profilkurve (DL2) an einem Endabschnitt der zweiten Profilkurve (DL2) in jedem der Schnitte der Scandaten, wobei die Schnitte entlang der entsprechenden Vielzahl von Platten (21) der plattenförmigen Daten (20) genommen werden.

5. Verfahren nach einem der Ansprüche 1 bis 4, wobei
das Anordnen der plattenförmigen Daten (20) derart, dass die plattenförmigen Daten (20) mit den Scandaten (10) überlagert sind, das Anordnen jeder der Vielzahl von Platten (21) in Ausrichtung mit einer Normalenrichtung der Kante (11) umfasst.

6. Verfahren nach einem der Ansprüche 1 bis 5, wobei
die Vielzahl von Platten (21) in den plattenförmigen Daten (20) jeweils eine Scheibenform aufweisen, deren Zentrum auf der Kantenlinie (EL1) liegt.

7. Verfahren nach einem der Ansprüche 1 bis 6, wobei
die Vielzahl von Platten (21) in den plattenförmigen Daten (20) in gleichen Abständen angeordnet ist.

8. Verfahren nach Anspruch 7, wobei
das Anordnen der plattenförmigen Daten (20) derart, dass die plattenförmigen Daten (20) mit den Scandaten (10) überlagert sind, umfasst:
Erfassen einer Länge der Kantenlinie (EL1) und der Abstände der Vielzahl von Platten (21), und
Bestimmen der Anzahl der Vielzahl von Platten (21) auf der Grundlage der Länge der Kantenlinie (EL1) und der Abstände der Vielzahl von Platten (21).

9. Verfahren nach einem der Ansprüche 1 bis 8, wobei
die Anzahl der Vielzahl von Platten (21) in den Daten 30 oder mehr und 3500 oder weniger beträgt.

10. Verfahren nach einem der Ansprüche 1 bis 9, wobei
die Zahnkante (11) eine Kante von mindestens einem von einem Pfeilerzahn, einer Kavität, einer Wartungsnut und einem Gebiss umfasst.

11. Ein computerlesbares Aufzeichnungsmedium, das so konfiguriert ist, dass es ein Programm speichert, das einen Computer dazu veranlasst, das Verfahren nach einem der Ansprüche 1 bis 10 auszuführen.

12. Vorrichtung zum Wiederherstellen einer Form einer durch Scannen veränderten Zahnkante (11), wobei die Vorrichtung umfasst:
einen oder mehrere Prozessoren; und
einen Speicher, der Anweisungen speichert, die von dem einen oder den mehreren Prozessoren ausführbar sind,
wobei die Anweisungen umfassen:
Erfassen von Scandaten (10) eines Zahns (100);
Zeichnen einer geschlossenen Kantenlinie (EL1), die die Zahnkante (11) in den Scandaten (10) angibt;
Löschen von Scandaten an der Zahnkante (11) auf der Grundlage der Kantenlinie (EL1) in den Scandaten (10);
Anordnen plattenförmiger Daten (20), die eine Vielzahl von Platten (25) widerspiegeln, welche in Abständen entlang der Kantenlinie (EL1) angeordnet sind, sodass die plattenförmigen Daten (20) mit den Scandaten (10) überlagert sind;
Extrahieren eines Umrisses des Zahns in jedem der Schnitte, die entlang der entsprechenden Vielzahl von Platten (21) der Scandaten (10) genommen werden, wobei der Umriss eine Konturlinie des in jedem der Schnitte verbleibenden Teils (13) ist;
Erzeugen einer ersten Profilkurve (DL1) und einer zweiten Profilkurve (DL2) auf der Grundlage eines entsprechenden Umrisses der Scandaten (10) so dass keine Profilkurve in dem Teil (12) erzeugt, welcher in jedem der Schnitte der Scandaten (10D) gelöscht wird, wobei die Schnitte entlang der entsprechenden Vielzahl von Platten (21) in den plattenförmigen Daten (20) genommen werden;
Verlängern der ersten Profilkurve (DL1) und der zweiten Profilkurve (DL2) in eine Richtung der Scandaten, die den in jedem der Schnitte der Scandaten gelöschten Teil (12) widerspiegelt, wobei die Schnitte entlang der entsprechenden Vielzahl von Platten (21) in den plattenförmigen Daten (20) genommen werden; und
Wiederherstellen der Zahnkante (11) auf der Grundlage der ersten Profilkurve (DL1) und der zweiten Profilkurve (DL2), die in jedem der Schnitte der Scandaten verlängert sind, wobei die Schnitte entlang der entsprechenden Vielzahl von Platten (21) in den plattenförmigen Daten (20) genommen werden.

13. Vorrichtung nach Anspruch 12, wobei
das Wiederherstellen der Zahnkante (11) umfasst:
Berechnen eines Schnittpunkts, an dem die verlängerte erste Profilkurve (DL1) und die verlängerte zweite Profilkurve (DL2) in jedem der Schnitte der Scandaten einander schneiden, wobei die Schnitte entlang der Vielzahl von Platten (21) der plattenförmigen Daten (20) genommen werden,
Verbinden der berechneten Schnittpunkte zur Erzeugung einer Schnittlinie (CL1),
und
Wiederherstellen der Zahnkante (11) auf der Grundlage der Schnittlinie (CL1).

14. Vorrichtung nach Anspruch 13, wobei
die Anweisungen ferner das Extrahieren einer Begrenzungslinie (BL1) umfassen,
die den in den Scandaten gelöschten Teil (12) umgibt,
wobei das Wiederherstellen der Zahnkante (11) auf der Grundlage der Schnittlinie (CL1) das Erzeugen von Formdaten von der Begrenzungslinie (BL1) bis zur Schnittlinie (CL1) umfasst.

15. Vorrichtung nach Anspruch 13 oder 14, wobei
das Verlängern der ersten Profilkurve (DL1) und der zweiten Profilkurve (DL2) umfasst:
Verlängern der ersten Profilkurve (DL1) unter Beibehaltung einer Krümmung oder einer Änderungsrate der Krümmung der ersten Profilkurve (DL1) an einem Endabschnitt der ersten Profilkurve (DL1) in jedem der Schnitte der Scandaten, wobei die Schnitte entlang der entsprechenden Vielzahl von Platten (21) der plattenförmigen Daten (20) genommen werden, und
Verlängern der zweiten Profilkurve (DL2) unter Beibehaltung einer Krümmung oder einer Änderungsrate der Krümmung der zweiten Profilkurve (DL2) an einem Endabschnitt der zweiten Profilkurve (DL2) in jedem der Schnitte der Scandaten, wobei die Schnitte entlang der entsprechenden Vielzahl von Platten (21) der plattenförmigen Daten (20) genommen werden.

## Revendications

1. Procédé de restauration d'une forme d'un bord (101) d'une dent (100), le bord (101) étant modifié par numérisation, en utilisant un ordinateur, le procédé comprenant:
acquérir des données de numérisation (10) sur une dent (100) ;
tracer une ligne de bord fermée (EL1) indiquant le bord (11) de la dent dans les données de numérisation (10);
supprimer des données de numérisation sur le bord (11) de la dent, sur la base de la ligne de bord (EL1) dans les données de numérisation (10) ;
disposer des données en forme de plaque (26) reflétant une pluralité de plaques (21) disposées à des intervalles le long de la ligne de bord (EL1) de sorte que les données en forme de plaque (26) soient superposées aux données de numérisation (10) ;
extraire un contour de la dent dans chacune des sections prises le long des plaques multiples (21) correspondantes des données de numérisation (10), le contour étant une ligne de contour de la partie (13) qui reste dans chacune des sections ;
créer une première courbe de profil (DL1) et une seconde courbe de profil (DL2) sur la base d'un contour correspondant des données de numérisation (10) de sorte qu'aucune courbe de profil ne soit créé dans la partie (12) supprimée dans chacune des sections des données de numérisation (10D), les sections étant prises le long des plaques multiples correspondantes (21) dans les données en forme de plaque (20) ;
prolonger la première courbe de profil (DL1) et la seconde courbe de profil (DL2) dans une direction vers la partie (12) supprimée dans chacune des sections des données de numérisation, les sections étant prises le long des plaques multiples correspondantes (21) dans les données en forme de plaque (20) ; et
restaurer le bord (11) de la dent (100) sur la base de la première courbe de profil (DL1) et de la seconde courbe de profil (DL2) qui sont prolongées dans chacune des sections des données de numérisation, les sections étant prises le long des plaques multiples correspondantes (21) dans les données en forme de plaque (20).

2. Procédé selon la revendication 1, dans lequel
la restauration du bord (11) de la dent comprend
calculer une intersection où la première courbe de profil (DL1) prolongée et la seconde courbe de profil (DL2) prolongée se croisent dans chacune des sections des données de numérisation, les sections étant prises le long des multiples plaques (21) des données en forme de plaque (20) ;
raccorder les intersections calculées afin de créer une ligne d'intersection (CL1) ; et
restaurer le bord (11) de la dent sur la base de la ligne d'intersection (CL1).

3. Procédé selon la revendication 2, comprenant en outre l'extraction d'une ligne de limitation (BL1) entourant la partie (12) supprimée dans les données de numérisation,
dans lequel la restauration du bord (11) de la dent sur la base de la ligne d'intersection (CL1) comprend la création de données de forme de la ligne de limitation (BL1) à la ligne d'intersection (CL1).

4. Procédé selon la revendication 2 ou 3, dans lequel
le prolongement de la première courbe de profil (DL1) et de la seconde courbe de profil (DL2) comprend
le prolongement de la première courbe de profil (DL1) tout en maintenant une courbure ou un taux de variation de courbure de la première courbe de profil (DL1) à une extrémité terminale de la première courbe de profil (DL1) dans chacune des sections des données de numérisation, les sections étant prises le long des plaques multiples correspondantes (21) des données en forme de plaque (20) ; et
le prolongement de la seconde courbe de profil (DL2) tout en maintenant une courbure ou un taux de variation de courbure de la seconde courbe de profil (DL2) à une extrémité terminale de la seconde courbe de profil (DL2) dans chacune des sections des données de numérisation, les sections étant prises le long des plaques multiples correspondantes (21) des données en forme de plaque (20).

5. Procédé selon l'une quelconque des revendications 1 à 4, dans lequel
la disposition des données en forme de plaque (20) de manière à ce que les données en forme de plaque (20) se superposent aux données de numérisation (10) comprend la disposition de chacune des plaques multiples (21) en alignement avec une direction normale du bord (11).

6. Procédé selon l'une quelconque des revendications 1 à 5, dans lequel
les plaques multiples (21) dans les données en forme de plaque (20) ont chacune une forme de disque dont le centre est situé sur la ligne de bord (EL1).

7. Procédé selon l'une quelconque des revendications 1 à 6, dans lequel
les plaques multiples (21) dans les données en forme de plaque (20) sont disposées à intervalles égaux.

8. Procédé selon la revendication 7, dans lequel
la disposition des données en forme de plaque (20) de manière à ce que les données en forme de plaque (20) soient superposées aux données de numérisation (10) comprend:
l'acquisition d'une longueur de la ligne de bord (EL1) et des intervalles des plaques multiples (21) ; et
la détermination du nombre de plaques multiples (21) sur la base de la longueur de la ligne de bord (EL1) et des intervalles des plaques multiples (21).

9. Procédé selon l'une quelconque des revendications 1 à 8, dans lequel
le nombre de plaques multiples (21) dans les données est égal ou supérieur à 30 et égal ou inférieur à 3500.

10. Procédé selon l'une quelconque des revendications 1 à 9, dans lequel
le bord (11) de la dent comprend un bord d'au moins un(e) parmi une dent de pilier, une cavité, un sillon de maintenance ou une dentition.

11. Support d'enregistrement lisible par ordinateur configuré pour enregistrer un programme destiné à amener un ordinateur à mettre en œuvre le procédé selon l'une quelconque des revendications 1 à 10.

12. Dispositif configuré pour restaurer une forme d'un bord (11) d'une dent (100), le bord (11) étant modifié par balayage, le dispositif comprenant :
un ou plusieurs processeur(s); et
une mémoire stockant des instructions exécutables par ledit un ou lesdits plusieurs processeur(s),
les instructions comprenant:
acquérir des données de numérisation (10) sur une dent (100) ;
tracer une ligne de bord fermée (EL1) indiquant le bord (11) de la dent dans les données de numérisation (10);
supprimer des données de numérisation sur le bord (11) de la dent, sur la base de la ligne de bord (EL1) dans les données de numérisation (10) ;
disposer des données en forme de plaque (26) reflétant une pluralité de plaques (21) disposées à des intervalles le long de la ligne de bord (EL1) de sorte que les données en forme de plaque (26) soient superposées aux données de numérisation (10) ;
extraire un contour de la dent dans chacune des sections prises le long des plaques multiples (21) correspondantes des données de numérisation (10), le contour étant une ligne de contour de la partie (13) qui reste dans chacune des sections ;
créer une première courbe de profil (DL1) et une seconde courbe de profil (DL2) sur la base d'un contour correspondant des données de numérisation (10) de sorte qu'aucune courbe de profil ne soit créé dans la partie (12) supprimée dans chacune des sections des données de numérisation (10D), les sections étant prises le long des plaques multiples correspondantes (21) dans les données en forme de plaque (20) ;
prolonger la première courbe de profil (DL1) et la seconde courbe de profil (DL2) dans une direction des données de numérisation reflétant la partie (12) supprimée dans chacune des sections des données de numérisation, les sections étant prises le long des plaques multiples correspondantes (21) dans les données en forme de plaque (20) ; et
restaurer le bord (11) de la dent (100) sur la base de la première courbe de profil (DL1) et de la seconde courbe de profil (DL2) qui sont prolongées dans chacune des sections des données de numérisation, les sections étant prises le long des plaques multiples correspondantes (21) dans les données en forme de plaque (20).

13. Dispositif selon la revendication 12, dans lequel
la restauration du bord (11) de la dent comprend:
calculer une intersection où la première courbe de profil (DL1) prolongée et la seconde courbe de profil (DL2) prolongée se croisent dans chacune des sections des données de numérisation, les sections étant prises le long des multiples plaques (21) des données en forme de plaque (20) ;
raccorder les intersections calculées afin de créer une ligne d'intersection (CL1) ; et
restaurer le bord (11) de la dent sur la base de la ligne d'intersection (CL1).

14. Dispositif selon la revendication 13, dans lequel
les instructions comprennent en outre l'extraction d'une ligne de limitation (BL1) entourant la partie (12) supprimée dans les données de numérisation,
dans lequel la restauration du bord (11) de la dent sur la base de la ligne d'intersection (CL1) comprend la création de données de forme de la ligne de limitation (BL1) à la ligne d'intersection (CL1).

15. Dispositif selon la revendication 13 ou 14, dans lequel
le prolongement de la première courbe de profil (DL1) et de la seconde courbe de profil (DL2) comprend:
le prolongement de la première courbe de profil (DL1) tout en maintenant une courbure ou un taux de variation de courbure de la première courbe de profil (DL1) à une extrémité terminale de la première courbe de profil (DL1) dans chacune des sections des données de numérisation, les sections étant prises le long des plaques multiples correspondantes (21) des données en forme de plaque (20) ; et
le prolongement de la seconde courbe de profil (DL2) tout en maintenant une courbure ou un taux de variation de courbure de la seconde courbe de profil (DL2) à une extrémité terminale de la seconde courbe de profil (DL2) dans chacune des sections des données de numérisation, les sections étant prises le long des plaques multiples correspondantes (21) des données en forme de plaque (20).
